# EUROPEAN PATENT SPECIFICATION

(11) **EP 3 789 966 B1**
(45) Date of publication and mention of the grant of the patent: **26.03.2025**
(21) Application number: 19791940.0
(22) Date of filing: 28.03.2019
(51) Int. Cl.: G06T 19/00, G06F 3/01

(54) **METHOD FOR REALIZING VIRTUAL SCENE CONVERSION AND RELATED DEVICE**
VERFAHREN ZUR UMWANDLUNG EINER VIRTUELLEN SZENE UND ZUGEHÖRIGE VORRICHTUNG
PROCÉDÉ DE CONVERSION DE SCÈNE VIRTUELLE ET DISPOSITIF ASSOCIÉ

(30) Priority: 28.04.2018 CN 201810407493
(43) Date of publication of application: 10.03.2021
(73) Proprietor: Tencent Technology (Shenzhen) Company Limited, Shenzhen, Guangdong, 518057 (CN)
(72) Inventor: JIANG, Huifu, Shenzhen, Guangdong 518057 (CN); XUE, Feng, Shenzhen, Guangdong 518057 (CN); LIU, Nan, Shenzhen, Guangdong 518057 (CN); GUO, Yifan, Shenzhen, Guangdong 518057 (CN)
(74) Representative: EP&C
(86) International application number: PCT/CN2019/080081
(87) International publication number: WO 2019/205879

(56) References cited:
- WO-A1-2016/164178
- WO-A1-2018/005557
- WO-A1-2018/005557
- CN-A- 106 157 359
- CN-A- 106 227 352
- CN-A- 106 484 123
- CN-A- 107 678 546
- CN-A- 108 665 553

## Description

### RELATED APPLICATION

This application claims priority to Chinese Patent Application No. 201810407493.9, titled "METHOD FOR IMPLEMENTING VIRTUAL SCENE CONVERSION AND RELATED APPARATUS" filed on April 28, 2018 with the China National Intellectual Property Administration.

### FIELD OF THE TECHNOLOGY

This application relates to the field of computer and information application, and in particular, to a technology for implementing virtual scene conversion.

### BACKGROUND OF THE DISCLOSURE

Technology of augmented reality (AR) gradually emerges and becomes public with rapid development of economy and technologies, a rise of the third largest industry of the Internet, and upgrading of information technologies. Various researches on AR interactive systems are becoming hot issues of public concerns.

AR is widely applied. For example, one of the current AR applications is called an AR portal. The AR portal is embodied as a virtual gate in the real world, through which a user can see a virtual world (or a virtual room). The virtual world is rendered by the mobile phone when a virtual object in the virtual world reaches the portal with movement of the mobile phone, so that a user is visually immersed in travelling from the real world to another world. In conventional AR portal technology, users can only experience travelling from the real world to another world.

Patent document No. WO2018005557A1 provides a method for changing a VR scene displayed in a head mounted display, in which inertial sensors are configured to determine whether a user is subject to disorientation, and the VR scene is changed to a modified version in case of a positive determination. Patent document No. WO2016164178A1 provides a method for selective filtering content of a VR scene which is selected by a user and to be displayed in a head mounted display worn by the user, where the VR scene displayed after the filtering presents content adjusted based on a rating score and the user's profile.

Currently, few scenes (only one scene) are applied to the AR portal, and the AR portal is applied to limited fields.

### SUMMARY

A method and a device for implementing virtual scene conversion are provided according to independent claims, to improve adaptability of different augmented reality/virtual reality services, and expand application scenarios of augmented reality/virtual reality.

In a first aspect, a method for implementing virtual scene conversion is provided according to an embodiment of the present disclosure, including:
displaying, in a screen region, an initial virtual scene, a first scene-conversion trigger set, and partial information of a target virtual scene, where a scene-conversion trigger is configured for conversion between different virtual scenes that are associated, and the first scene-conversion trigger set includes a first scene-conversion trigger associated with the initial virtual scene;
determining, when a trigger operation on the first scene-conversion trigger is received, the target virtual scene and a second scene-conversion trigger set based on the trigger operation, where the second scene-conversion trigger set includes multiple second scene-conversion triggers associated with the determined target virtual scene; and
rendering the determined target virtual scene and the determined second scene-conversion trigger set, and displaying, in the screen region, the determined target virtual scene and the determined second scene-conversion trigger set.

In a second aspect, an apparatus for implementing virtual scene conversion is provided according to an embodiment of the present disclosure, including:
a display module, configured to: display, in a screen region, an initial virtual scene, a first scene-conversion trigger set, and partial information of a target virtual scene, where a scene-conversion trigger is configured for conversion between different virtual scenes that are associated, and the first scene-conversion trigger set includes a first scene-conversion trigger associated with the initial virtual scene;
a first determining module, configured to: determine, when a trigger operation on the first scene-conversion trigger is received, the target virtual scene and a second scene-conversion trigger set based on the trigger operation, where the second scene-conversion trigger set includes multiple second scene-conversion triggers associated with the determined target virtual scene; and
a rendering module, configured to: render the determined target virtual scene and the determined second scene-conversion trigger set, where the determined target virtual scene and the determined second scene-conversion trigger set are displayed in the screen region.

In a third aspect, a terminal is provided according to an embodiment of the present disclosure, including:
a memory, configured to store a computer executable program code;
a transceiver; and
a processor, coupled to the memory and the transceiver,
where the program code includes an instruction, and the instruction when being executed by the processor configures the terminal to perform the method according to the first aspect.

In a fourth aspect, a computer storage medium is provided according to an embodiment of the present disclosure, where the computer storage medium is configured to store a computer software instruction for a terminal, and the instruction includes a program for performing the method according to the first aspect.

In a fifth aspect, a computer program product including an instruction is provided according to an embodiment of the present disclosure, where the instruction when run on a computer configures the computer to perform the method according to the first aspect.

It may be learned from the foregoing technical solutions that the embodiments of this application have the following advantages:

In embodiments of the present disclosure, the initial virtual scene and the first scene-conversion trigger set for triggering scene conversion are displayed on the screen region of the terminal, and the first scene-conversion trigger set includes the first scene-conversion trigger associated with the initial virtual scene. When the initial virtual scene is a virtual reality scene, the first scene-conversion trigger set includes at least one first scene-conversion trigger. When the initial virtual scene is an augmented reality scene, the first scene-conversion trigger set includes at least two first scene-conversion triggers. When one first scene-conversion trigger is triggered, the terminal converts the virtual scene from the initial virtual scene into the target virtual scene associated with the first scene-conversion trigger, and the target virtual scene and the second scene-conversion trigger set in the target virtual scene are displayed on the screen region. In such case, the target virtual scene becomes the initial virtual scene, and the second scene-conversion trigger set in the target virtual scene becomes the first scene-conversion trigger set. In embodiments of the present disclosure, conversion among multiple virtual scenes can be achieved, so that a user experiences visually travelling among the virtual scenes. Thereby, adaptability is improved for different services of augmented reality/virtual reality/mixed reality, and application scenarios are expanded for augmented reality/virtual reality/mixed reality.

### BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic flowchart of a method for implementing virtual scene conversion according to an embodiment of the present disclosure;
Figure 2 is a schematic diagram of another application scenario according to an embodiment of the present disclosure;
Figure 3 is a schematic diagram of another application scenario according to an embodiment of the present disclosure;
Figure 4 is a schematic diagram of another application scenario according to an embodiment of the present disclosure;
Figure 5 is a schematic flowchart of a method for implementing virtual scene conversion according to an embodiment of the present disclosure;
Figure 6 is a schematic diagram of reducing dimensionality of a three-dimensional scene according to an embodiment of the present disclosure;
Figure 7 is a schematic diagram of a two-dimensional scene obtained by reducing dimensionality of a three-dimensional scene in a virtual scene set according to an embodiment of the present disclosure;
Figure 8 is a schematic perspective view of two layers of virtual scenes according to an embodiment of the present disclosure;
Figure 9 is a schematic diagram of a perspective principle of a scene-conversion trigger according to an embodiment of the present disclosure;
Figure 10 is a schematic perspective view of three layers of virtual scenes according to an embodiment of the present disclosure;
Figure 11 is a schematic diagram of another application scenario according to an embodiment of the present disclosure;
Figure 12 is a schematic diagram of scene-conversion triggers with a blocking relationship according to an embodiment of the present disclosure;
Figure 13 is a schematic diagram of another application scenario according to an embodiment of the present disclosure;
Figure 14 is a schematic diagram of another application scenario of a scene-conversion trigger according to an embodiment of the present disclosure;
Figure 15 is a schematic diagram of another application scenario of a scene-conversion trigger according to an embodiment of the present disclosure;
Figure 16 is a schematic diagram of another application scenario according to an embodiment of the present disclosure;
Figure 17 is a schematic diagram of another application scenario according to an embodiment of the present disclosure;
Figure 18 is a schematic diagram of another application scenario according to an embodiment of the present disclosure;
Figure 19 is a schematic diagram of another application scenario according to an embodiment of the present disclosure;
Figure 20 is a schematic structural diagram of an apparatus for implementing virtual scene conversion according to an embodiment of the present disclosure;
Figure 21 is a schematic structural diagram of another apparatus for implementing virtual scene conversion according to an embodiment of the present disclosure;
Figure 22 is a schematic structural diagram of an apparatus for implementing virtual scene conversion according to an embodiment of the present disclosure;
Figure 23 is a schematic structural diagram of an apparatus for implementing virtual scene conversion according to an embodiment of the present disclosure;
Figure 24 is a schematic structural diagram of an apparatus for implementing virtual scene conversion according to an embodiment of the present disclosure;
Figure 25 is a schematic structural diagram of an apparatus for implementing virtual scene conversion according to an embodiment of the present disclosure; and
Figure 26 is a schematic structural diagram of an apparatus for implementing virtual scene conversion according to an embodiment of the present disclosure.

### DESCRIPTION OF EMBODIMENTS

A method for implementing virtual scene conversion and a related apparatus are provided according to embodiments of the present disclosure, so as to improve adaptability of different services of virtual reality/augmented reality and expand application scenarios of virtual reality/augmented reality.

To make the object, technical solutions and advantages of the present application clearer, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure. The term "multiple" in embodiments of the present disclosure refers to a quantity of two or more.

In the specification, claims, and accompanying drawings of the present disclosure, the terms "first", "second", "third", "fourth", and the like (if existing) are intended to distinguish between similar objects rather than describe a specific sequence or a precedence order. It is to be understood that data used in such manner is interchangeable in proper cases, so that embodiments described herein can be implemented in an order other than the order illustrated or described herein. Moreover, the terms "include", "contain" and any other variants mean to cover the non-exclusive inclusion, for example, a process, method, system, product, or device that includes a list of steps or units is not necessarily limited to these units, but may include another unit that is not expressly listed or is inherent to such process, method, system, product, or device.

A method for implementing virtual scene conversion is provided according to an embodiment of the present disclosure. The method may be applied to displaying in a virtual scene of augmented reality, virtual reality (VR), or mixed reality (MR). An application of augmented reality application is taken as an example in an embodiment, and a specific application scenario is not limited in practice. Virtual reality is a new type of computer technology evolving from various information technologies, such as computer vision and human-computer interaction. A person can travel and be immersed in a completely virtual world via a displaying device, by separating vision from the real world. Augmented reality overlays virtual information on a specific position with reference to an identified object, and interaction can be performed on virtual information in real time to enhance a visual effect. As combination of the virtual reality and the augmented reality, mixed reality is a new, interactive, and visual environment generated by combining a real world and a virtual world, in which digital objects and physical objects coexist.

The method is applied to a terminal. The terminal includes a camera and a display screen. The terminal may be a mobile phone, a palmtop computer, a computer, a headmounted device (such as VR glasses or a VR helmet), etc. A mobile phone is taken as an example of the terminal for illustration in embodiments of the present disclosure.

In embodiments of the present disclosure, an initial virtual scene, a first scene-conversion trigger set (for example, a set of portals in an initial scene), and partial information of a target virtual scene are displayed in a screen region of the terminal. A scene-conversion trigger is configured for conversion between different virtual scenes that are associated. The virtual scenes include an initial virtual scene and a target virtual scene. The virtual scene may be an augmented reality scene, a virtual reality scene, or a mixed reality scene. The virtual scene belongs to a virtual scene set including multiple virtual scenes. The first scene-conversion trigger set includes a first scene-conversion trigger associated with the initial virtual scene. When the terminal receives a trigger operation on the first scene-conversion trigger, the terminal determines the target virtual scene and a second scene-conversion trigger set based on the first scene-conversion trigger in the initial virtual scene. The second scene-conversion trigger set includes multiple second scene-conversion triggers associated with the determined target virtual scene. The terminal renders the determined target virtual scene and the determined second scene-conversion trigger set, and displays the target virtual scene and the second scene-conversion triggers corresponding to the target virtual scene in the screen region.

In embodiments of the present disclosure, the initial virtual scene and the first scene-conversion trigger set for triggering scene conversion are displayed on the screen region of the terminal, and the first scene-conversion trigger set includes the first scene-conversion trigger associated with the initial virtual scene. When the initial virtual scene is a virtual reality scene, the first scene-conversion trigger set includes at least one first scene-conversion trigger. When the initial virtual scene is an augmented reality scene, the first scene-conversion trigger set includes at least two first scene-conversion triggers. When one first scene-conversion trigger is triggered, the terminal converts the virtual scene from the initial virtual scene into the target virtual scene associated with the first scene-conversion trigger, and the target virtual scene and the second scene-conversion trigger set in the target virtual scene are displayed on the screen region. In such case, the target virtual scene becomes the initial virtual scene, and the second scene-conversion trigger set in the target virtual scene becomes the first scene-conversion trigger set. In embodiments of the present disclosure, conversion among multiple virtual scenes can be achieved, so that a user experiences visually travelling among the virtual scenes. Thereby, adaptability is improved for different services of augmented reality/virtual reality/mixed reality, and application scenarios are expanded for augmented reality/virtual reality/mixed reality.

The method may be applied to various services and scenarios of augmented reality/virtual reality/mixed reality. For example, the method may be applied to a game service, in which players may travel among different scenes to complete tasks. Alternatively, the method may be applied to a military training service, in which users may travel among multiple different scenes (for example, a land scene, a marine scene, an urban scene) to complete different combat missions. Alternatively, the method may be applied to a tourism service, in which users may select different cities or scenic spots for travelling and can enjoy beautiful scenery without leaving houses while experiencing reality in the virtual world. Services and scenarios to which embodiments of the present disclosure may be applied are not limited herein.

Terms in embodiments of the present disclosure are described first to facilitate understanding.

A virtual scene set includes multiple virtual scenes. The virtual scene may be a pre-built three-dimensional scene, and there is association among the multiple virtual scenes. For example, the virtual scene may be a desert scene, a land scene, a marine scene, or the like. The virtual scene is built according to different services, and a specific scene is not limited in practice.

A virtual scene may be an initial virtual scene or a target virtual scene. The initial virtual scene may be a virtual reality scene or an augmented reality scene. The initial virtual scene may be a three-dimensional space scene (a three-dimensional world) in which a virtual object is located. The target virtual scene is a virtual scene into which the initial virtual scene is to be converted. There is only one initial virtual scene, and there are multiple target virtual scenes. The virtual scene belongs to the virtual scene set. For example, the initial virtual scene is a desert scene, and the desert scene is associated with the land scene. In such case, the land scene may be the target virtual scene. After the desert scene is converted into the land scene, the land scene becomes the initial virtual scene. Therefore, the initial virtual scene and target virtual scene are relative concepts.

A scene-conversion trigger is configured to implement conversion between different virtual scenes that are associated, and is further configured to display the partial information of the target virtual scene at a position of the scene-conversion trigger. The scene-conversion trigger may be an area, or may be a dynamic image rendered in such area. In a practical application scenario, the scene-conversion trigger may be a virtual portal, a hole, or the like. The partial information of the target virtual scene is rendered at the position of the scene-conversion trigger, which indicates that a user may enter a next virtual scene via the scene-conversion trigger (where the "virtual scene" may be also known as a "virtual world" or a "world" in embodiments of the present disclosure). The target virtual scene is visible to the user through the portal, according to an angle and a position of the virtual object.

The first scene-conversion trigger set is a scene-conversion trigger set corresponding to the initial virtual scene. The set includes multiple first scene-conversion triggers. The multiple first scene-conversion triggers may be arranged in series, in parallel, or in both series and parallel.

The second scene-conversion trigger set is a scene-conversion trigger set corresponding to the target virtual scenes. The set includes multiple second scene-conversion triggers. The multiple second scene-conversion triggers may be arranged in series, in parallel, or in both series and parallel.

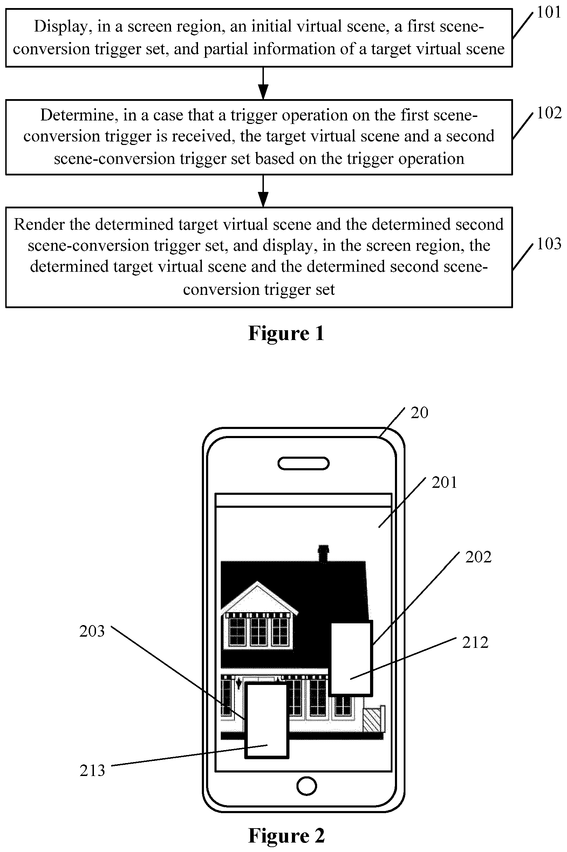

Hereinafter the present disclosure is described by using specific embodiments. Reference is made to Figure 1. A method for implementing virtual scene conversion is provided according to an embodiment of the present disclosure, including following steps 101 to 103.

In step 101, an initial virtual scene, a first scene-conversion trigger set, and partial information of a target virtual scene are displayed in a screen region.

The screen region includes a first virtual region and a second virtual region. The first virtual region is configured to display the initial virtual scene and the first scene-conversion trigger set. The second virtual region is configured to display the target virtual scene in the initial virtual scene. The first virtual region and the second virtual region constitute the entire screen region.

The initial virtual scene may be a virtual scene, an augmented reality scene, or a mixed reality scene. For example, it is necessary to acquire a real-scene image of a real scene via a camera, when the initial virtual scene is an augmented reality scene. The initial virtual scene includes the real-scene image. When the initial virtual scene is a virtual reality scene, the initial virtual scene includes a virtual image. A specific initial virtual scene is not limited in an actual application scenario.

The scene-conversion trigger is configured for conversion between different virtual scenes that are associated, and the first scene-conversion trigger set includes the first scene-conversion trigger which is associated with the initial virtual scene.

In this embodiment, a mobile phone is taken as an example of the terminal. The initial scene, the first scene-conversion trigger set, and the partial information of the target virtual scene are displayed in the whole area of the screen region of the mobile phone. Alternatively, the initial scene, the first scene-conversion trigger set, and the partial information of the target virtual scene may be displayed in a partial area of the screen region of the mobile phone.

The first scene-conversion trigger set corresponds to the initial virtual scene. In this embodiment, a quantity of the first scene-conversion triggers included in the first scene-conversion trigger set is not limited. In this embodiment, it may be taken as an example for illustration that a quantity of the first scene-conversion triggers is two.

In this embodiment, the initial virtual scene and the two first scene-conversion triggers corresponding to the initial virtual scene are displayed in the screen region. The initial virtual scene is associated with the target virtual scene through the first scene-conversion trigger. The partial information of the target virtual scene is displayed in an area corresponding to the first scene-conversion trigger.

Reference is made to Figure 2, which is a schematic diagram of an application scenario according to an embodiment of the present disclosure.

An initial virtual scene 201 (for example, an image of a house) is displayed in the screen region of the mobile phone. The initial virtual scene corresponds to two first scene-conversion triggers, which are a first scene-conversion trigger 202 and a first scene-conversion trigger 203. A first target virtual scene 212 (for example, a desert scene) is displayed in an area corresponding to the first scene-conversion trigger 202. The initial virtual scene 201 is associated with the first target virtual scene 212 (for example, the desert scene) through the first scene-conversion trigger 202, and the initial virtual scene 201 is associated with the first target virtual scene 213 (for example, a forest scene) through the first scene-conversion trigger 203. In an application scenario, the initial virtual scene (for example, the house) and the two first scene-conversion triggers (for example, two portals) of the initial virtual scene are visible to a user. Different target virtual scenes are visible to the user through each portal. For example, partial information of the desert scene is visible to the user through the first portal, and partial information of the forest scene is visible to the user through the second portal.

In step 102, the target virtual scene and a second scene-conversion trigger set is determined based on a trigger operation on the first scene-conversion trigger, when the trigger operation is received.

The first scene-conversion trigger in this step is any first scene-conversion trigger in the initial virtual scene displayed on the screen.

The mobile phone detects position information of the mobile phone, and calculates a position of the virtual object in the initial virtual scene according to the position information of the mobile phone. The mobile phone determines whether the trigger operation on the first scene-conversion trigger is received, according to whether the virtual object reaches a position of the first scene-conversion trigger.

When the terminal detects that the virtual object reaches the first scene-conversion trigger, the terminal determines the target virtual scene (for example, a forest scene) associated with the first scene-conversion trigger and a position of the second scene-conversion trigger corresponding to the target virtual scene (for example, the forest scene).

There is a mapping relationship between a position of the terminal in the real scene and the position of the virtual object in the virtual scene. In an embodiment, a user moves while carrying the mobile phone. The terminal detects the position of the terminal in real time, and calculates the position of the virtual object in the initial virtual scene according to the position of the terminal. When the virtual object reaches the position of the first scene-conversion trigger, the terminal determines that the trigger operation on the first scene-conversion trigger is received. The terminal determines a position of a second scene-conversion trigger set corresponding to the target virtual scene (for example, the forest scene), and determines the second scene-conversion trigger (portal) set in the forest scene serving as a target of subsequent conversion. The second scene-conversion trigger set in the target virtual scene includes at least one second scene-conversion trigger.

In step 103, the determined target virtual scene and the determined second scene-conversion trigger set are rendered, and the determined target virtual scene and the determined second scene-conversion trigger set are displayed in the screen region.

The terminal renders the determined target virtual scene (for example, the forest scene) and the second scene-conversion trigger set, and displays in the screen region the forest scene and the corresponding portal set in the forest scene. In such case, the initial virtual scene is the forest scene, and the corresponding portal set in the forest scene becomes the first scene-conversion trigger set, facilitating subsequent conversion from the initial virtual scene to the target virtual scene.

A user experiences visually travelling from the current house scene to the forest scene. Similarly, when the terminal detects that the position of the virtual object reaches a position of the other portal, the terminal determines a position of the second scene-conversion trigger set corresponding to the target virtual scene (for example, the desert scene), and determines a portal set in the desert scene serving as a target of subsequent conversion. The desert scene may further include a scene-conversion trigger set, and thereby the desert scene may be converted into a next target virtual scene.

In embodiments of the present disclosure, the initial virtual scene and the first scene-conversion trigger set for triggering scene conversion are displayed on the screen region of the terminal, and the first scene-conversion trigger set includes the first scene-conversion trigger associated with the initial virtual scene. When the initial virtual scene is a virtual reality scene, the first scene-conversion trigger set includes at least one first scene-conversion trigger. When the initial virtual scene is an augmented reality scene, the first scene-conversion trigger set includes at least two first scene-conversion triggers. When one first scene-conversion trigger is triggered, the terminal converts the virtual scene from the initial virtual scene into the target virtual scene associated with the first scene-conversion trigger, and the target virtual scene and the second scene-conversion trigger set in the target virtual scene are displayed on the screen region. In such case, the target virtual scene becomes the initial virtual scene, and the second scene-conversion trigger set in the target virtual scene becomes the first scene-conversion trigger set. In embodiments of the present disclosure, conversion among multiple virtual scenes can be achieved, so that a user experiences visually travelling among the virtual scenes. Thereby, adaptability is improved for different services of augmented reality/virtual reality/mixed reality, and application scenarios are expanded for augmented reality/virtual reality/mixed reality.

Conversion among multiple scenes is implemented in embodiments of the present disclosure, so that the user experiences immersive travelling among the multiple worlds. In this embodiment, different virtual scenes are built according to different services, and the user travels among different worlds according to a requirement of different services. For example, the user travels among multiple different scenes (such as a land scene, a marine scene, and an urban scene) in a military training service, to complete different combat missions. Alternatively, the user may select multiple different cities or scenic spots for traveling in a tourism service. Therefore, adaptability is improved for different services of augmented reality/virtual reality, and application scenarios are expanded for augmented reality/virtual reality.

**In** an optional embodiment, the initial virtual scene is associated with at least two first scene-conversion triggers. One of the at least two first scene-conversion triggers is a virtual-real scene-conversion trigger, which is for conversion between a virtual scene and a real scene.

A second real-scene image in the real scene is collected through a camera. The second real-scene image is overlaid at a position of the virtual-real scene-conversion trigger. The real scene is visible to the user through an area corresponding to the virtual-real scene-conversion trigger.

When the virtual-real scene-conversion trigger in the initial virtual scene is determined to be triggered, the terminal collects a third real-scene image in the real scene according to a real-time angle and a position of the camera, and displays the third real-scene image. The terminal performs conversion from the initial virtual scene to the real scene, and the user experiences visually travelling from the initial virtual scene to the real scene.

**In** embodiments of the present disclosure, the scene-conversion trigger is further configured to display the partial information of the target virtual scene. Accordingly, the scene-conversion trigger may be is displayed in different forms. In an application scenario, the target virtual scene may be visible to the user through the scene-conversion trigger. Hereinafter forms of displaying the scene-conversion trigger are intuitively described from a user side. The forms of displaying scene-conversion trigger include: (1) serial arrangement of scene-conversion triggers; (2) parallel arrangement of scene-conversion triggers; and (3) mixed arrangement of scene-conversion triggers, in which both serial arrangement and parallel arrangement of scene-conversion triggers are included.

### (1) Serial arrangement of scene-conversion triggers

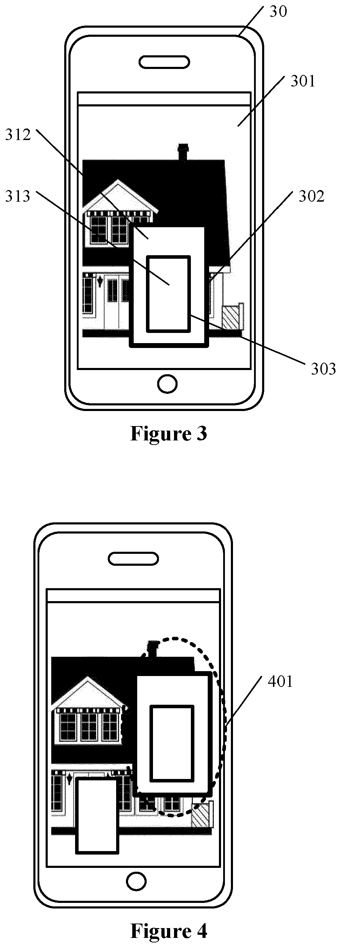

Reference is made to Figure 3, which is a schematic diagram of an application scenario according to an embodiment of the present disclosure. A terminal 30 displays an initial virtual scene 301. The terminal determines a position of a first scene-conversion trigger (for example, a portal) 302 in the initial virtual scene 301. A first target virtual scene (for example, a desert scene) 312 is displayed in an area corresponding to the first scene-conversion trigger 302. A second scene-conversion trigger (a portal) 303 in the target virtual scene 312 is further displayed in the area corresponding to the first scene-conversion trigger 302. The second scene-conversion trigger 303 displays partial information of the second target virtual scene (for example, a forest scene) 313. More portals and a target virtual scene in each portal may be further displayed in the second target virtual scene 302. In an embodiment of the present disclosure, there may be multiple second scene-conversion triggers. In this embodiment, the first target virtual scene 312 (for example, the desert scene) is visible to the user through the first scene-conversion trigger 302, and the second target virtual scene (for example, the forest scene) 313 is further visible through the second scene-conversion trigger 303 corresponding to the first target virtual scene (for example, the desert scene) 312.

### (2) Parallel arrangement of scene-conversion triggers

Reference is made to Figure 2. It is taken as an example that there are two first scene-conversion triggers in the initial virtual scene 201, namely, the first scene-conversion trigger 202 and the first scene-conversion trigger 203. The first target virtual scene (for example, a desert scene) 212 is displayed in an area corresponding to the first scene-conversion trigger 202. The initial virtual scene 201 is associated with the first target virtual scene (for example, the desert scene) 212 through the first scene-conversion trigger 202. The initial virtual scene 201 is associated with the first target virtual scene (for example, a forest scene) 213 through the first scene-conversion trigger 203.

### (3) Mixed arrangement of scene-conversion triggers

Reference is made to Figure 4. Both scene-conversion triggers 401 in serial arrangement as shown in Figure 3 and a scene-conversion trigger 402 in parallel arrangement as shown in Figure 2 are displayed in the initial virtual scene.

In a practical application, the serial arrangement of scene-conversion triggers and the parallel arrangement of scene-conversion triggers may be arbitrarily combined in the initial virtual scene. The description herein is merely exemplary, and the present disclosure is not limited thereto.

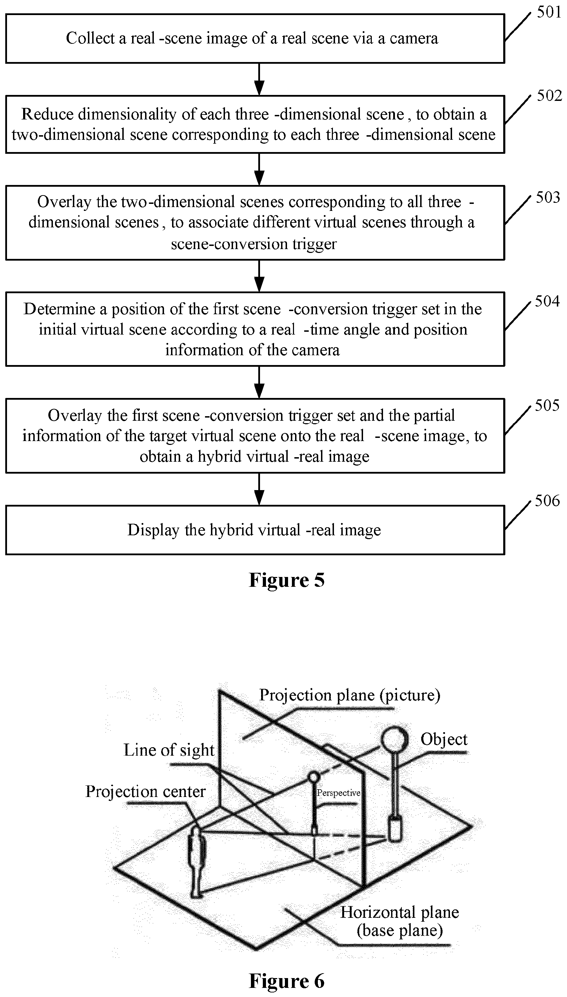

Hereinafter specific implementation of the three forms of displaying the scene-conversion triggers and conversion among different virtual scenes are illustratively described in conjunction with embodiments. Reference is made to Figure 5, which is a schematic flowchart of a method for implementing virtual scene conversion according to an embodiment of the present disclosure.

Hereinafter the present disclosure is described in details. In this embodiment, augmented reality is taken as an example for illustration, and a terminal serves an execution body.

In step 501, a real-scene image of a real scene is collected via a camera.

The terminal detects a real-time angle of the camera and position information of the terminal. The camera collects the real-scene image of the real scene under the angle and the position information. For example, a user stands in front of a house, and the camera of the mobile phone collects a real-scene image of the house, in the scenes in Figure 2 and Figure 3.

The step 501 is an optional step. For a virtual reality scene, the step 501 may not be performed, and step 502 may be directly performed.

In step 502, dimensionality of each three-dimensional scene is reduced, to obtain a two-dimensional scene corresponding to each three-dimensional scene.

The terminal performs dimensionality reduction on each stored three-dimensional scenes, to obtain the two-dimensional scene corresponding to each three-dimensional scene.

In embodiments of the present disclosure, the three-dimensional scene includes a background and all virtual objects within the three-dimensional scene. The multiple three-dimensional scenes are pre-built according to a service. The multiple three-dimensional scenes are built according to different services of augmented reality. For example, the multiple three-dimensional scenes in a tourism service may be different scenic spots, such as the Forbidden City, a museum, or the Temple of Heaven. The multiple three-dimensional scenes may be indoor scenes or outdoor scenes, and a specific three-dimensional scene is built according to an actual situation. Alternatively, the multiple three-dimensional scenes in an adventure game service may be a forest scene, a desert scene, a land scene, a urban scene, and the like. In embodiments of the present disclosure, the multiple three-dimensional scenes are pre-built according to a specific service.

Reference is made to Figure 6, which is a schematic diagram of reducing dimensionality of a three-dimensional scene. Each point on an object is described with three coordinates (x, y, z) in a three-dimensional coordinate system. A three-dimensional object is projected, and the projecting is conversion mapping a three-dimensional object to a two-dimensional object. In Figure 6, a projecting line (or a line of sight) is drawn from a spatial point (also known as a perspective point or a projection center), and a projecting plane is placed between the three-dimensional object and the projection center. The three-dimensional object is perspectively projected onto the projection plane, to obtain a two-dimensional image on the projection plane. Hence, dimensionality of the three-dimensional image is reduced, to obtain a two-dimensional image. Each three-dimensional scene corresponds to a two-dimensional scene, and each two-dimensional scene corresponds to multiple two-dimensional images.

In step 503, the two-dimensional scenes corresponding to all three-dimensional scenes are overlaid, to associate different virtual scenes through a scene-conversion trigger.

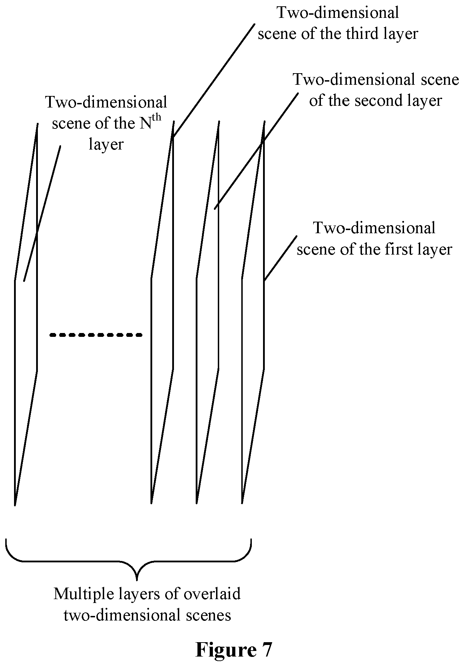

Referring to Figure 7, which is a schematic diagram of two-dimensional scenes in a virtual scene set, which are obtained by reducing dimensionality of three-dimensional scenes. The virtual scene set includes multiple two-dimensional scenes that are overlaid. There may be N two-dimensional scenes, where N is a positive integer greater than or equal to 2. Each of the multiple two-dimensional scenes is one layer in the virtual scene set. The multiple two-dimensional scenes are overlaid to achieve overlaying the multiple scenes. In embodiments of the present disclosure, dimensionality of the three-dimensional scene is reduced, which is an intermediate process of rendering the virtual scene. Thereby, the multiple three-dimensional scenes are capable to be overlaid, and the multiple virtual scenes are associated through the scene-conversion trigger. In dimensionality reduction, the multiple scenes may be overlaid in sequence, and the scene-conversion trigger is disposed in each scene. A texture of an area corresponding to the scene-conversion trigger is transparent, and thereby partial information of a next scene can be displayed through the scene-conversion trigger.

The steps 502 and 503 are for obtaining the virtual scene set. Such steps may be performed by a backend server. The terminal receives the virtual scene set transmitted by the backend server. The steps 502 and 503 are optional. Step 504 may be directly performed without performing the steps 502 and 503.

In step 504, a position of the first scene-conversion trigger set in the initial virtual scene is determined according to a real-time angle and position information of the camera.

The terminal determines the first scene-conversion trigger in the initial virtual scene according to the real-time angle of the camera and the position information of the terminal. For example, a portal may be rendered at a position corresponding to the first scene-conversion trigger, and different virtual items may be rendered at the position corresponding to the first scene-conversion trigger according to actual application scenarios.

In step 505, the first scene-conversion trigger set and the partial information of the target virtual scene are overlaid onto the real-scene image, to obtain a hybrid virtual-real image.

There may be multiple target virtual scenes, including at least a first target virtual scene and a second target virtual scene. For example, the first target virtual scene may be a virtual scene of a first layer (for example, a forest scene), and the second target virtual scene may be a virtual scene of a second layer (for example, a land scene).

First, there is a mapping relationship between the real-time angle of the camera and a viewing angle corresponding to the virtual object in the virtual scene, and the terminal may calculate the viewing angle of the virtual object in the virtual scene according to the real-time angle of the camera. The terminal determines the position information of the terminal through a sensor. There is a mapping relationship between the position information of the terminal and the position of the virtual object in the virtual scene, and the terminal calculates the position of the virtual object in the virtual scene according to the position information of the terminal. The terminal maps the real-time angle of the camera and the position information of the terminal, to the viewing angle and the position of the virtual object in the virtual scene. Accordingly, the terminal determines the viewing angle and the position of the virtual object in the virtual scene, according to the real-time angle of the camera and the position information. The virtual object (for example, the virtual object may be a virtual character) may be displayed. Alternatively, the virtual object may be not displayed, that is, the virtual object is not visible to the user in the virtual scene.

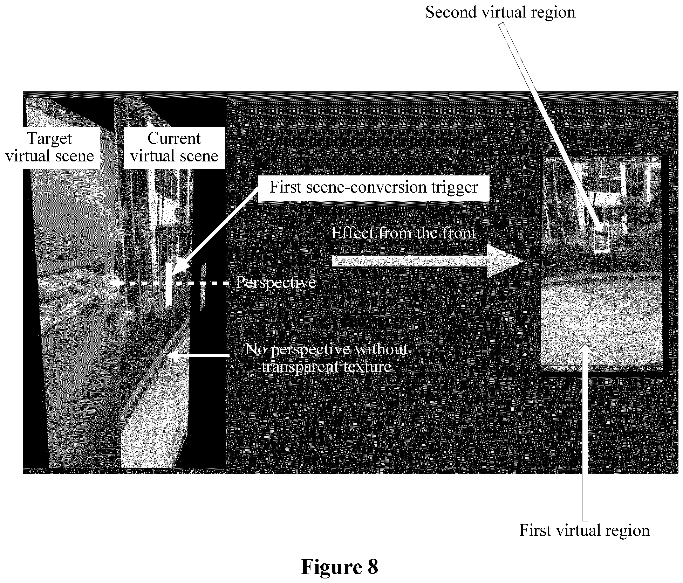

Reference is made to Figure 8, which is a perspective view of two layers of target virtual scenes (worlds). The first scene-conversion trigger (portal) is of a transparent texture. The transparent texture may indicate not rendering the first scene-conversion trigger (portal) while rendering a virtual scene in a next layer.

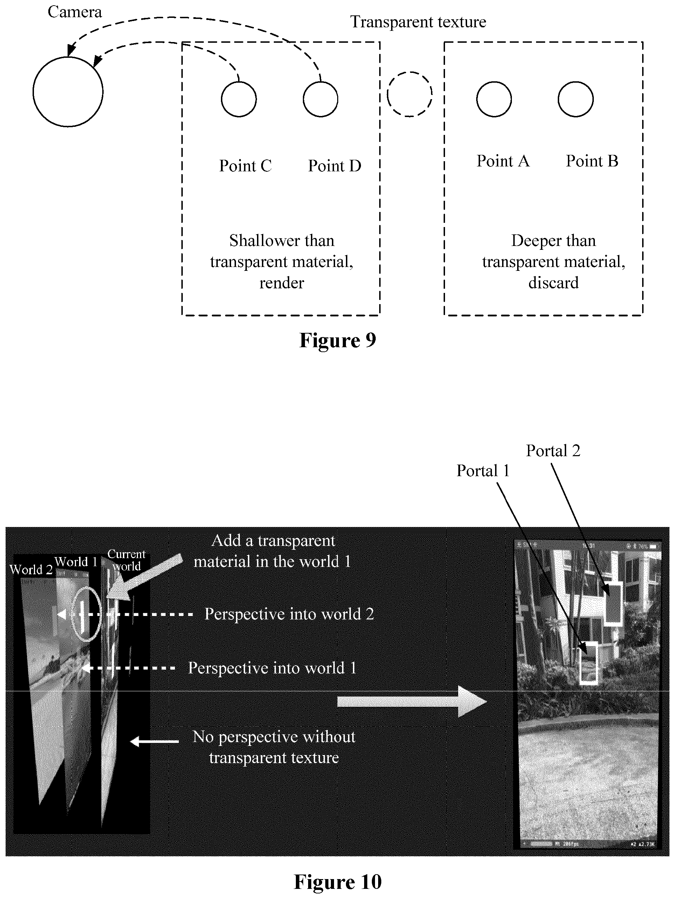

Reference is made to Figure 9, which is a diagram of a perspective principle for a scene-conversion trigger according to an embodiment of the present disclosure. Each point with a depth greater than a depth of the transparent texture (that is, each point that is a background point with respect to the first portal, such as a point A and a point B in Figure 9) is not rendered by the terminal. Each point with a depth less than the depth of the transparent texture (that is, each point that is a foreground point with respect to the first portal, such a point C and a point D in Figure 9) is rendered under a normal depth. In such way, a visual illusion is created. When the line of sight passes the first portal, all the objects (including the background) behind the portal are not rendered. Instead, a virtual scene in a next layer is rendered. The line of sight directly passes the initial virtual scene and reaches the virtual scene in the next layer.

Reference is made to Figure 10, which is a schematic diagram of a perspective principle of three layers of virtual scenes (worlds). A transparent texture is added to the initial virtual scene (an initial world), and the transparent texture is further added to a first target virtual scene (a world 1) at a position corresponding to the initial world. The partial information of a second target virtual scene (a world 2) is rendered at a position of a first scene-conversion trigger (a portal 2), so that the world 2 is directly visible to the user through the portal 2. The partial information of the world 1 is rendered at a position of another first scene-conversion trigger (a portal 1) corresponding to the initial virtual scene, so that the first target virtual scene (that is, the world 1) is directly visible to the user through the portal 1. The initial virtual scene is associated with the world 1 through the portal 1, and the initial virtual scene is associated with the world 2 through the portal 2. In this embodiment, the scene-conversion triggers are arranged in parallel, and different target virtual scenes are visible through the associated first scene-conversion triggers.

A second scene-conversion trigger may be disposed at a position of the transparent texture in the world 1, and the partial information of the second target virtual scene (the world 2) may rendered at a position of the second scene-conversion trigger. In such case, the partial information of the world 1 and a portal in the world 1 are visible to the user through the portal 1 in the initial world, and the partial information of the world 2 are visible to the user through the portal in the world 1.

Reference is made to Figure 3 for an optional embodiment. The scene-conversion triggers are arranged in series. The initial virtual scene corresponds to at least one first scene-conversion trigger, and the first target virtual scene corresponds to the second scene-conversion trigger. The partial information of the first target virtual scene is rendered at the position of the first scene-conversion trigger, according to a viewing angle and a position of a virtual object. The second scene-conversion trigger corresponding to the first target virtual scene is rendered in the partial information of the first target virtual scene. The partial information of the second target virtual scene is rendered at the position of the second scene-conversion trigger corresponding to the first target virtual scene.

In this embodiment, at least two target virtual scenes are displayed through the scene-conversion triggers arranged in series. That is, a portal in the initial world and a first target virtual scene (for example, a forest scene) associated with the portal are visible to the user. Another portal (a portal not in the initial world) and the first target virtual scene (for example, the forest scene) associated with the portal in the initial world are visible to the user through the portal in the initial world. There may be a portal between the first target virtual scene (the world 1) and the second target virtual scene (the world 2), and a portal between the second target virtual scene (the world 2) and a third target virtual scene (a world 3). Line of sight passes both the portal between the world 1 and the world 2 and the portal between the world 2 and the world 3, to view the word 3 from the world 1. Similarly, multiple worlds are visible through multiple portals from the world 1. In an intermediate world (for example, the world 2), a portal with a same orientation is added at a same coordinate position, and thereby perspective from the initial world is established through the portals (which includes transparentizing an interface carrying a two-dimensional world, such as a view of an IOS system and a layer of an Android system).

Reference is made to Figure 2 for another optional embodiment. At least two first scene-conversion triggers in the initial virtual scene are displayed in the screen region. The partial information of a target virtual scene is rendered at a position of each first scene-conversion trigger. The initial virtual scene is associated with different target virtual scenes, which are rendered at positions of different first scene-conversion triggers, through the corresponding first scene-conversion triggers. The initial virtual scene, each first scene-conversion trigger, and the target virtual scene rendered at the position of each first scene-conversion trigger are displayed. Two parallel perspective first scene-conversion triggers, such as a portal 1 and a portal 2, are added to the initial virtual scene (which may be referred to as an initial world). At the portal 1, the initial virtual world is not rendered while the first target virtual scene (a world 1) is rendered. The partial information of the second target virtual scene (that is, a world 2) is rendered at the portal 2. Different ranges and different partial information of the first virtual scene and the second virtual scene are rendered, under different real-time angles of the camera and different positions of the terminal.

In this embodiment, the at least two first scene-conversion triggers are arranged in parallel. Each first scene-conversion trigger in the initial virtual scene is associated with a different target virtual scene, and different target virtual scenes are displayed through the at least two first scene-conversion triggers.

In this embodiment, the at least two scene-conversion triggers are overlaid on a real-scene image to obtain a hybrid virtual-real image. Multiple portals and a different target virtual scene associated with each portal are displayed in the hybrid virtual-real image.

In step 506, the hybrid virtual-real image is displayed.

Reference is made to Figure 2 and Figure 3. The terminal displays the hybrid virtual-real image on the display screen. The at least two portals in the real scene is visible to the user from the display screen. A different target virtual scene (that is, a different world) is displayed in each portal.

In embodiments of the present disclosure, a quantity of virtual scenes (which are also referred to as "worlds") displayed in the hybrid virtual-real image is not limited. Only two target virtual scenes are illustrated as an example in above embodiments. A specific quantity of target virtual scenes in a practical application is not limited herein.

The above embodiments are exemplary description for an augmented reality scene. The principle is the same as that of the above embodiments, when the method is applied to virtual reality. In an optional embodiment for a virtual reality scene, a difference from the embodiment corresponding to Figure 5 lies in that the terminal is not required to obtain a real-scene image in the real scene.

The terminal obtains the real-time angle and the position information of the camera. The terminal then determines the first scene-conversion trigger set in the initial virtual scene (namely, the initial scene is a virtual scene) according to the real-time angle and the position information of the camera. The first scene-conversion trigger set is configured for displaying the target virtual scene. The terminal renders and displays the first scene-conversion trigger set and the partial information of the target virtual scene at the position of the first scene-conversion trigger, according to the real-time angle and the position information of the camera.

In an optional embodiment based on the above embodiments, the target virtual scene includes at least a first target virtual scene and a second target virtual scene, and the virtual scene set includes images corresponding to angles and positions of all three-dimensional scenes. The screen region includes a first virtual region and a second virtual region. The first virtual region is for displaying the initial virtual scene and the first scene-conversion trigger set. The second virtual region is for displaying the target virtual scene in the initial virtual scene. Specific steps of displaying the initial virtual scene, the first scene-conversion trigger set, and the partial information of the target virtual scene in the screen region may as follows.

The terminal may determine a viewing angle and a position of a virtual object in the virtual scene, according to the real-time angle and the position information of the camera. Various images in the target virtual scene under various angles and distances are pre-stored in the terminal. A first image corresponding to the initial virtual scene under the view of angle and the position of the virtual object, and a first scene-conversion trigger, are loaded into the first virtual region. A second image corresponding to the target virtual scene, which is associated with the initial virtual scene, under the viewing angle and the position of the virtual object is loaded into the second virtual region.

In this embodiment, images are pre-built at various angles and positions for all virtual scenes. After the terminal determines the real-time angle of the camera and the position of the terminal, the terminal calculates accordingly the viewing angle of the virtual object and the position of the virtual object in the virtual scene, and then directly loads an image corresponding to the viewing angle of the virtual object and the position of the virtual object. A speed of rendering the virtual scene is improved.

In an optional embodiment, it is described how a user experiences travelling from a real scene to a virtual scene.

When a trigger operation on the first scene-conversion trigger is received, the target virtual scene and a second scene-conversion trigger set are determined based on the operation on the first scene-conversion trigger in the initial virtual scene. The determined target virtual scene and the determined second scene-conversion trigger set are rendered, and the determined target virtual scene and the determined second scene-conversion trigger set corresponding to the determined target virtual scene are displayed in the screen region.

### (1) Application scenario with serial arrangement of scene-conversion triggers

In the initial world, there may be multiple portals, and the multiple portals may be displayed in a form as shown in Figure 2 (that is, the portal 2 is visible inside the portal 1). The portal 1 (the first scene-conversion trigger) may be referred to as a portal in the initial world, and the portal 2 (the second scene-conversion trigger) may be referred to as a portal in a non-initial world. The portal in the initial world is directly visible in the initial world, and the portal in the non-initial world is only visible through the portal connecting the initial world to the non-initial world.

Further, a user traveling from the real scene to the first target virtual scene is described from a side of the user.

The terminal detects a real-time angle of the camera and an initial position of the terminal, and calculates a viewing angle and a position of a virtual object in the initial virtual scene based on the real-time angle of the camera and the initial position of the terminal.

When the virtual object reaches a position of the first scene-conversion trigger, it is determined that the first scene-conversion trigger in the initial virtual scene is triggered, and the first target virtual scene associated with the initial virtual scene through the first scene-conversion trigger is determined. A second scene-conversion trigger corresponding to the first target virtual scene is determined. The first target virtual scene and the second scene-conversion trigger are rendered, and the first target virtual scene and the second scene-conversion trigger corresponding to the first target virtual scene are displayed in the screen region. The first target virtual scene becomes the initial virtual scene, and the second scene-conversion trigger becomes the first scene-conversion trigger in the initial virtual scene.

Specifically, when the virtual object reaches the position of the first scene-conversion trigger (the first portal), the first target virtual scene (for example, a land scene) associated with the first scene-conversion trigger and the second scene-conversion trigger in the first target virtual scene (an area corresponding to a portal in the land scene) are determined. The terminal determines to convert the initial virtual scene (an augmented reality scene) into the first target virtual scene (for example, the land scene), that is, the terminal renders the first target virtual scene (for example, the land scene) and the second scene-conversion trigger in the screen region. In such case, the first target virtual scene becomes the initial virtual scene, and the second scene-conversion trigger in the first target virtual scene becomes the first scene-conversion trigger.

Further, conversion into the target virtual scene may be performed as follows. When the virtual object reaches the position of the first scene-conversion trigger in the initial virtual scene, it is determined that the first scene-conversion trigger in the initial virtual scene is triggered. It is determined, according to the first scene-conversion trigger, to convert the initial virtual scene into a second target virtual scene associated with the first scene-conversion trigger in the initial virtual scene. A second scene-conversion trigger associated with the second target virtual scene is determined. The second target virtual scene and the second scene-conversion trigger associated with the second target virtual scene are rendered and displayed in the screen region. The second target virtual scene becomes the initial virtual scene, and the second scene-conversion trigger becomes the first scene-conversion trigger in the initial virtual scene.

In an application scenario in which the scene-conversion triggers are arranged in series, the terminal renders the target virtual scenes sequentially, according to a sequence of the serial arrangement of the scene-conversion triggers. Reference is made to Figure 8 and Figure 10. Two scene-conversion triggers that are spatially adjacent are associated with the same target virtual scene, and every two adjacent scene-conversion triggers are arranged in series.

For example, the initial virtual scene is associated with the first target virtual scene through the scene-conversion trigger #1, the first target virtual scene is associated with the second target virtual scene through the scene-conversion trigger #2, and the second target virtual scene is associated with the third target virtual scene through the scene-conversion trigger #3. Both the scene-conversion trigger #1 and the scene-conversion trigger #2 are associated with the first target virtual scene, and both the scene-conversion trigger #2 and scene-conversion trigger #3 are associated with the second target virtual scene. The scene-conversion trigger #1, the scene-conversion trigger #2, and the scene-conversion trigger #3 are arranged in series. Other cases can be obtained by analogy. In an application scenario in which the scene-conversion triggers are arranged in series, a user needs to travel the target virtual scenes layer by layer according to a sequence of displaying the target virtual scenes.

In this embodiment, the terminal converts the initial virtual scene (an augmented reality scene) into the first target virtual scene (for example, a forest scene), and then converts the first target virtual scene (for example, the forest scene) into the second target virtual scene (for example, a land scene). From a side of the user, the user travels from the real scene to the forest scene, and then travels from the forest scene to the land scene.

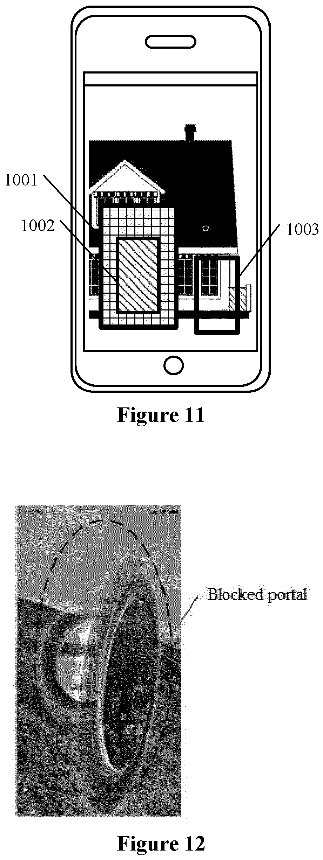

In another embodiment of the serial arrangement of the scene-conversion triggers, the initial virtual scene is associated with at least two first scene-conversion triggers. One of the at least two first scene-conversion triggers is a virtual-real scene-conversion trigger, and the virtual-real scene-conversion trigger is configured for conversion between a virtual scene and a real scene. Reference to is made to Figure 11. In Figure 11, the first scene-conversion trigger 1001 (for example, a portal 1) displays the first target virtual scene and the second scene-conversion trigger 1002 (for example, a portal 2) corresponding to the first target virtual scene, and the first scene-conversion trigger 1003 is a virtual-real scene-conversion trigger (for example, a portal 3). In this embodiment, no first target virtual scene is rendered at the virtual reality scene-conversion trigger, when the initial virtual scene is an augmented reality scene. The portal 1 and the portal 2 are configured to render virtual scenes, and no virtual scene is rendered at the portal 3.

The terminal obtains the second real-scene image in the real scene according to the real-time angle and the position of the camera. The terminal overlays the second real-scene image on the virtual-real scene-conversion trigger. In this embodiment, the virtual-real scene-conversion trigger is configured to associate with the real scene, and the real scene is visible to the user in the initial virtual scene.

Further, when the terminal detects that the virtual object reaches the position of the virtual-real scene-conversion trigger (for example, the portal 3), a third real-scene image in the real scene is collected according to the real-time angle and the position of the camera. The initial virtual scene is converted into the real scene, and the terminal displays the third real-scene image. In an application scenario of this embodiment, a user may be in a forest scene, and a portal 1 may be visible to the user. A land scene is displayed in the portal 1, and a portal 2 within the portal 1 is visible through the portal 1. A desert scene is displayed in the portal 2. A portal 3 is also visible to the user, and the real scene is displayed in the portal 3. The user moves toward the position of the portal 3 when carrying the mobile phone. When the virtual object reaches the position of the portal 3, the mobile phone displays a real-scene image in the real scene, and the user experiences travelling from the virtual scene to the real scene.

### (2) Application scenario with parallel arrangement of scene-conversion triggers

The initial virtual scene, the first scene-conversion trigger set, and the partial information of the target virtual scene are displayed in the screen region, which specifically includes followings steps.

At least two first scene-conversion triggers in the initial virtual scene are displayed in the screen region. The partial information of one target virtual scene is rendered at a position of each first scene-conversion trigger. The initial virtual scene is associated with different target virtual scenes rendered at positions of different first scene-conversion triggers, through the corresponding first scene-conversion trigger. The initial virtual scene, each first scene-conversion trigger, and a target virtual scene rendered at a position of each first scene-conversion trigger, are displayed in the screen region.

Multiple first scene-conversion triggers are located at different positions in the initial virtual scene. The initial virtual scene may be an augmented reality scene. A different target virtual scene is rendered in an area corresponding to each first scene-conversion trigger. The real scene is associated with a target virtual scene rendered in the area corresponding to each target scene-conversion trigger, through said target scene-conversion trigger. Each target virtual scene belongs to a virtual scene set. In an optional embodiment, reference is made to Figure 12, which is a schematic diagram of scene-conversion triggers with a blocking relationship. The initial world may include multiple scene-conversion triggers (portals), and there is a blocking relationship among the portals. In such case, the blocking relationship is determined by positions of the portals in the initial virtual scene.

When a designated first scene-conversion trigger is determined in the initial virtual scene, the target virtual scene and the second scene-conversion trigger corresponding to the target virtual scene are determined based on the designated first scene-conversion trigger in the initial virtual scene.

In an optional embodiment, when the virtual object reaches a position of any of the at least two first scene-conversion triggers, the target virtual scene and the second scene-conversion trigger associated with the target virtual scene are determined based on the initial virtual scene and the designated first scene-conversion trigger. In an application scenario, there are at least two portals on the real-scene image, namely, a portal 1 and a portal 2. The real scene is associated with the first target virtual scene (for example, a forest scene) through the portal 1, and is associated with the second virtual scene (for example, a land scene) through the portal 2. When the virtual object reaches the portal 1, the terminal renders the forest scene. When the virtual object reaches the portal 2, the terminal renders the land scene. It is taken as an example that the virtual object reaches the portal 1 and the terminal renders the forest scene, in which the user experiences travelling to the forest scene. In the forest scene, multiple portals may be visible to the user, and each portal is associated with a different target virtual scene. In this embodiment, the terminal determines a target virtual scene associated with the terminal, according to different first scene-conversion triggers (different parallel portals), and converts the initial virtual scene through any first scene-conversion trigger that is triggered. From a side of the user, the user does not need to travel through the scenes layer by layer, and can directly travel from the initial virtual scene to a target virtual scene associated with the designated first scene-conversion trigger.

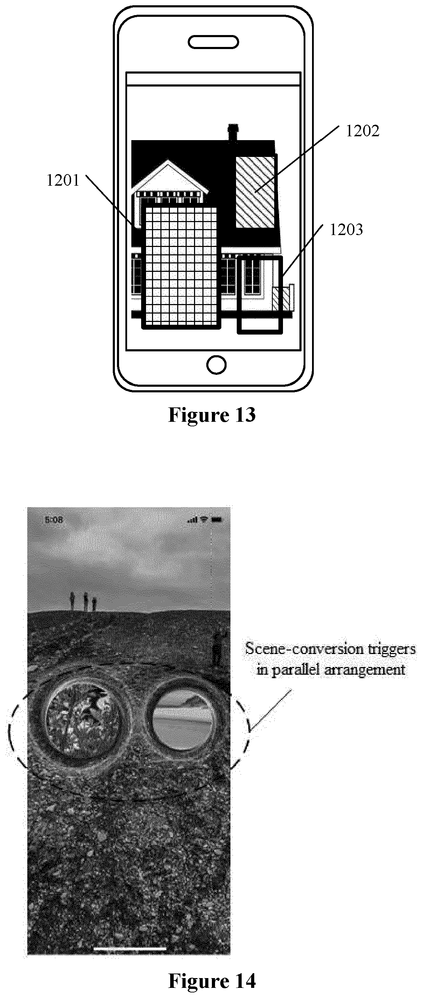

In another optional embodiment, reference is made to Figure 13. The terminal displays three first scene-conversion triggers in the screen region. One of the first scene-conversion triggers is a virtual-real scene-conversion trigger. The first target virtual scene is displayed in an area corresponding to the first scene-conversion trigger 1201 (for example, a portal 1), and the second target virtual scene is displayed in an area corresponding to the first scene-conversion trigger 1202 (for example, a portal 2). The virtual-real scene-conversion trigger 1203 (the portal 3) is configured to associate with the real scene, and the real scene is visible to the user in the initial virtual scene.

Further, when the terminal detects that the virtual object reaches the position of the virtual-real scene-conversion trigger (for example, the portal 3), a third real-scene image in the real scene is collected according to the real-time angle and the position of the camera. The initial virtual scene is converted into the real scene, and the terminal displays the third real-scene image.

In an application scenario of this embodiment, the user may be in a forest scene, and the portal 1 and the portal 2 is visible to the user. The portal 1 and the portal 2 are arranged in parallel. A land scene is visible through the portal 1.

A desert scene is visible through the portal 2. A portal 3 is further visible to the user, and the real scene is displayed in the portal 3. The user moves toward the position of the portal 3 when carrying the mobile phone. When the virtual object reaches the position of the portal 3, the mobile phone displays the real-scene image in the real scene, and the user experiences travelling from the initial virtual scene to the real scene.

The scene-conversion trigger (for example, a portal) may connect two virtual scenes (virtual worlds), which are a source world and a target world. Scenery of the source world is displayed outside the portal, and scenery of the target world is displayed inside the portal. The portal is visually displayed in the source world, for viewing the target world. Therefore, the first scene-conversion trigger set corresponding to the initial virtual scene refers to all first scene-conversion triggers (portals) in the initial world, and the second scene-conversion trigger (portals) set in a target virtual scene (world) refers to all scene-conversion triggers (portals) that belong to a world serving as the source world.

In this embodiment of the present disclosure, different virtual scenes are rendered in a same coordinate system. Objects in each world are independent. The objects in the initial world may be directly observed, and the objects in other worlds need to be observed through one or more corresponding portals. Since all worlds share the same coordinate system, different worlds in the same space may be provided with independent objects, and different worlds does not interfere with each other in rendering the objects.

In a same world, rigid body properties of different objects may or may not affect each other, which depends a requirement in a service of augmented reality. Rigid body properties of different objects in different worlds may or may not affect each other. The rigid body property refers to a property that a shape, a size, and a relative position of internal points are unchanged when subject to a motion or a force. It is assumed that there are two objects, such as two cars, in a virtual scene of a virtual world. When the two cars have no rigid body property, the two cars do not affect each other when positions of the two cars overlap. When the two objects have the rigid body property, coordinates of the two objects cannot overlap, and otherwise the two objects collide. In embodiments of the present disclosure, whether objects in different scenes have the rigid body property may be set according to different services, which is not specifically limited herein. For example, different objects may have the rigid body property in a military training service, and may have no rigid body property in a game service.

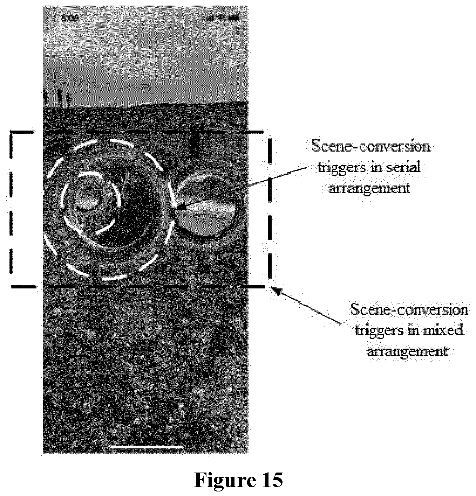

Reference is made to Figure 14 and Figure 15. In Figure 14, there are scene-conversion triggers in parallel arrangement (parallel portals). In the initial virtual scene, a first target virtual scene is visible through a scene-conversion trigger, and another first target virtual scene is visible through another scene-conversion trigger. Figure 15 shows scene-conversion triggers in mixed arrangement. A target virtual scene in a second layer is visible from a target virtual scene in a first layer, through a corresponding portal. Portals with a same orientation and a same position are disposed in the target virtual scenes of the first layer and the second layer, so as to view a target virtual scene of a third layer from the target virtual scene of the first layer through corresponding portals. In such case, a line of sight passes the portal corresponding to the target virtual scene of the first layer to reach the target virtual scene of the second layer, and then passes the portal corresponding to the target virtual scene of the second layer to reach the target virtual scene of the third layer. Other cases can be obtained by analogy. A target virtual scene of a Y-th layer may be visible through another parallel portal, where Y is less than or equal to N, and N is a total quantity of virtual scenes.

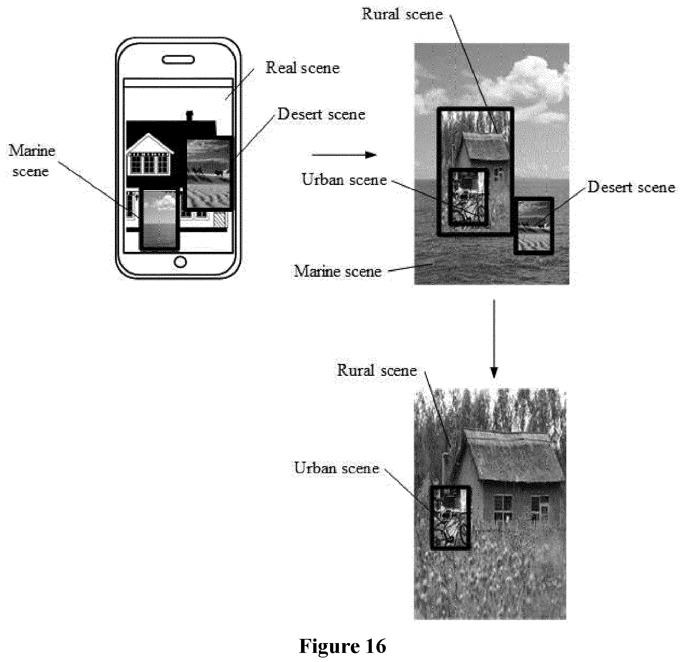

Reference is made to Figure 16, which is a schematic diagram of an application scenario according to an embodiment of the present disclosure. In an application scenario, the method according to an embodiment of the present disclosure is applied to a tourism service. In a virtual scene set, a target virtual scene of a first layer is a marine scene, a target virtual scene of a second layer is a rural scene, a target virtual scene of a third layer is an urban scene, and a target virtual scene of a fourth layer is a desert scene.

A real scene is displayed on a user's mobile phone. Two virtual portals are displayed in the real scene. A marine scene is displayed inside a portal A, and the marine scene may be the target virtual scene in the first layer in the virtual scene set. A desert scene is displayed inside another virtual portal B, and the desert scene is the fourth scene in the virtual scene set. Accordingly, a transparent texture is disposed in the target virtual scenes in the second layer and the third layer, and a line of sight of a user can reach the target virtual scene (the desert scene) of the fourth layer directly through the portal B.

The real scene is associated with the marine scene through the portal A, and the real scene is associated with the desert scene through the portal B.

The user moves while carrying the mobile phone, and a virtual object in the virtual scenes moves accordingly. When the virtual object reaches a position of the portal A, the terminal renders the marine scene, so that the user experiences visually travelling from the real scene to the marine scene and staying in the marine scene.

In the marine scene, the rural scene is visible to the user through a portal C, the urban scene is visible to the user through a portal D within the portal C, and the desert scene is visible to the user through a portal E. In the marine scene, coordinates of the portal C and the portal E are not changed, that is, positions of the portal C and the portal E are not changed. When an angle of a camera is changed, a viewing angle of the virtual object in the marine scene changes accordingly, and scenery of the marine scene changes. In some angles of view, the portal C and the portal D are not present. The portals re-appear, after the user rotates the camera, namely, the viewing angle of the virtual object changes.

Similarly, the user moves when carrying the mobile phone, and a virtual object in the virtual scene moves accordingly. When the virtual object reaches the portal C, the terminal renders the rural scene, so that the user experiences visually travelling from the real scene to the rural scene and staying in the rural scene. There may further be a portal F in the virtual scene. The portal F is associated with the real scene. When the virtual object reaches a position of the portal F, the terminal displays a real-scene image according to a real-time angle and a position of the camera. The terminal displays the real-scene image, so that the user experiences travelling from the virtual scene to the real scene.

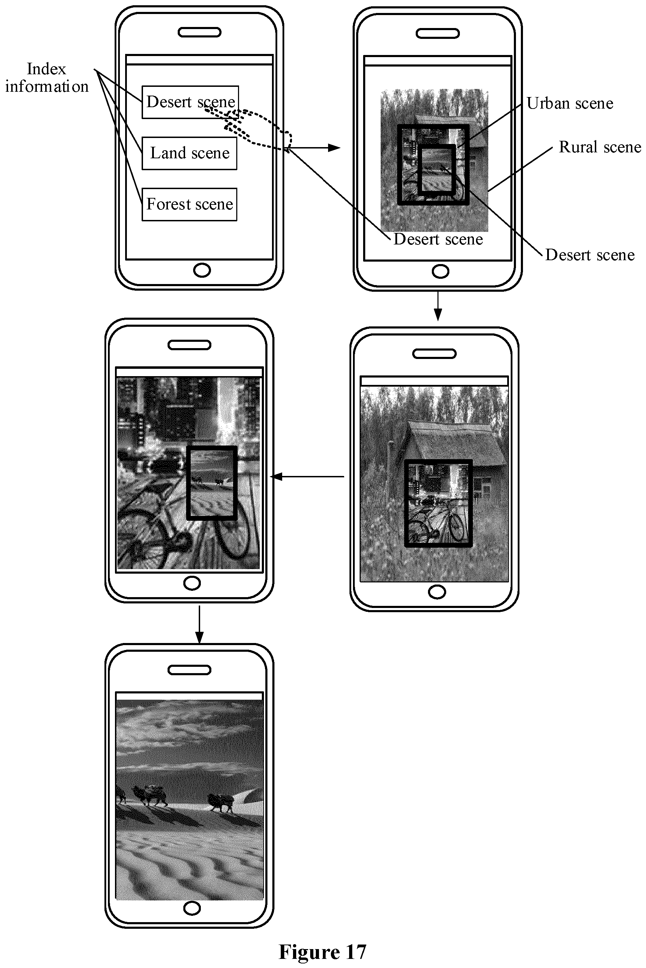

In another optional embodiment, reference is made to Figure 17. The screen region further displays index information of multiple target virtual scenes. The index information includes, but is not limited to, text information introducing the target virtual scenes (such as a text reading "urban scene" and "desert scene"), picture information, or virtual scene information (displaying the target virtual scene directly through the portal).

The terminal displays the index information of the multiple target virtual scenes.

The user selects based on the index information. For example, the user reads a text describing a desert and selects the desert scene. The terminal receives an inputted selection operation for selecting the target virtual scene. The selection operation may be a tap operation performed by the user.

The terminal may determine a path for rendering the target virtual scene, according to the selection operation of the user. The terminal renders X virtual scenes layer by layer according to the selection operation, until the target virtual scene is rendered, where X is a natural number.

The path may be appreciated as virtual scenes that need to be rendered layer by layer, for rendering the target virtual scene. That is, the path indicates which target virtual scene is necessary to be rendered for rendering the target virtual scene. For example, the target virtual scene selected by the user may be a desert scene, desert scene may be the target virtual scene in the third layer, the target virtual scene in the first layer is the rural scene, and the target virtual scene in the second layer is the urban scene. In such case, the path is as follows. The rural scene is rendered first, then the urban scene is rendered, and the selected target virtual scene (the desert scene) is rendered after the above two virtual scenes are rendered.

The path may be displayed in a form of serial areas (serial portals). That is, the forest scene is displayed in a portal 1, a portal 2 is visible through the portal 1, the land scene is visible through the portal 2, a portal 3 is visible through the portal 2, and the desert scene is displayed in the portal 3.

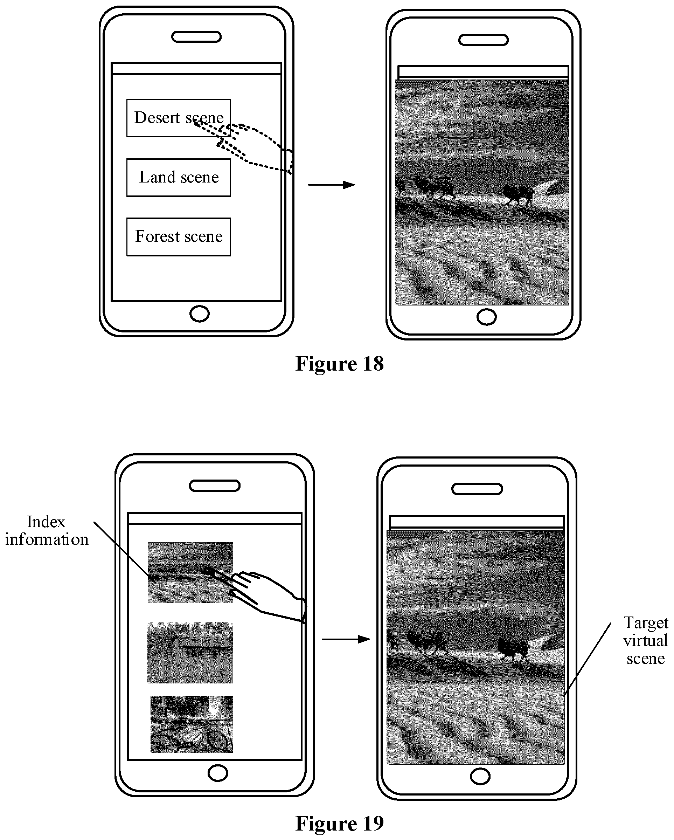

In another possible embodiment, reference is made to Figure 18. The terminal may select the target virtual scene through a selection operation, and the terminal may directly render the selected target virtual scene (a desert scene) according to the selection operation.

In this embodiment, the terminal may display the index information. The index information is configured provide an index for a user to select a virtual scene. The user may perform a selection operation based on the index information. The terminal may render directly the target virtual scene selected by the user, or the terminal may render the selected target virtual scene through the path. Thereby, the user experiences visually travelling to the selected target virtual scene directly. Application scenarios are expanded for different services.

Reference is made to Figure 19. The index information is a thumbnail of a target virtual scene. The thumbnail is configured to display the target virtual scene more intuitively. A user may perform a selection operation according to the index information. The terminal may render directly the scene selected by the user, or the terminal may render the selected target virtual scene through the path. Thereby, the user experiences visually travelling to the selected target virtual scene directly. Application scenarios are expanded for different services.

In another embodiment, the method for implementing virtual scene conversion according to embodiments of the present disclosure may be applied to a system. The system may include a terminal and a server. A difference between this embodiment and the embodiment corresponding to Figure 5 lies in that the dimensionality of the three-dimensional scene is reduced by the server.

The terminal collects the real-world image in the real scene via the camera.

The server reduces the dimensionality of the multiple three-dimensional scenes, to obtain the two-dimensional scene corresponding to each three-dimensional scene, and overlays the multiple three-dimensional scenes by overlaying the multiple two-dimensional scenes.

The server sends the virtual scene set to the terminal.

The terminal receives the virtual scene set, and determines the first scene-conversion trigger in the initial virtual scene, according to the real-time angle and the position information of the camera. The first scene-conversion trigger is configured to display the partial information of the target virtual scene.

The terminal determines the position of the first scene-conversion trigger set in the initial virtual scene, according to the real-time angle and the position information of the camera.

The terminal displays the initial virtual scene, the first scene-conversion trigger set, and the partial information of the target virtual scene in the screen region.

In embodiments of the present disclosure, the terminal collects the real-world image in the real scene via the camera. The server reduces dimensionality of the multiple three-dimensional scenes, to obtain the two-dimensional scene corresponding to each three-dimensional scene, and overlays the multiple three-dimensional scenes by overlaying the multiple two-dimensional scenes. In this embodiment, the server reduces dimensionality of the multiple three-dimensional scenes, saving processing resources of the terminal. The terminal determines the first scene-conversion trigger in the initial virtual scene, according to the real-time angle and the position information of the camera. For example, the virtual scene may be a forest scene, a desert scene, or the like. At the first scene-conversion trigger, various forms such as a portal and a black hole can be rendered according to different application scenarios. The terminal renders the partial information of the target virtual scene in an area corresponding to the first scene-conversion trigger, according to the real-time angle and the position information of the camera. Then, the terminal displays the hybrid virtual-real image via a display screen. In embodiments of the present disclosure, dimensionality of each three-dimensional scene is reduced to obtain the corresponding two-dimensional scene, and then multiple two-dimensional scenes are overlaid layer by layer to overlay the virtual scenes. When rendering the virtual scenes, the terminal may render and display the multiple three-dimensional scenes in the virtual scene set, so as to improve adaptability of different services of virtual reality/augmented reality and expand application scenarios of virtual reality/augmented reality.

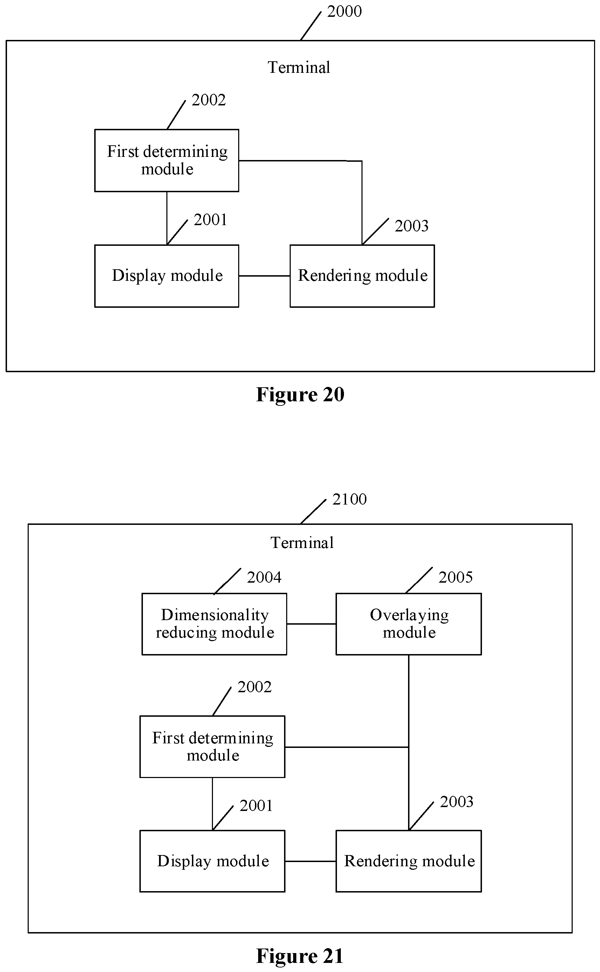

Reference is made to Figure 20. An apparatus for implementing virtual scene conversion is provided according to an embodiment of the present disclosure. The terminal is configured to perform steps performed by the terminal in the foregoing method embodiments. The apparatus 2000 includes a display module 2001, a first determining module 2002, and a rendering module 2003.

The display module 2001 is configured to display, in a screen region, an initial virtual scene, a first scene-conversion trigger set, and partial information of a target virtual scene, where a scene-conversion trigger is configured for conversion between different virtual scenes that are associated, and the first scene-conversion trigger set includes a first scene-conversion trigger associated with the initial virtual scene.

The first determining module 2002 is configured to determine, when a trigger operation on the first scene-conversion trigger is received, the target virtual scene and a second scene-conversion trigger set based on the trigger operation, where the second scene-conversion trigger set includes multiple second scene-conversion triggers associated with the determined target virtual scene.

The rendering module 2003 is configured to render the target virtual scene and the second scene-conversion trigger set that are determined by the first determining module 2002.

The display module 2001 is further configured to display, in the screen region, the target virtual scene and the second scene-conversion trigger set that determined by the first determining module 2002.

**In** embodiments of the present disclosure, the initial virtual scene and the first scene-conversion trigger set for triggering scene conversion are displayed on the screen region of the terminal, and the first scene-conversion trigger set includes the first scene-conversion trigger associated with the initial virtual scene. When the initial virtual scene is a virtual reality scene, the first scene-conversion trigger set includes at least one first scene-conversion trigger. When the initial virtual scene is an augmented reality scene, the first scene-conversion trigger set includes at least two first scene-conversion triggers. When one first scene-conversion trigger is triggered, the terminal converts the virtual scene from the initial virtual scene into the target virtual scene associated with the first scene-conversion trigger, and the target virtual scene and the second scene-conversion trigger set in the target virtual scene are displayed on the screen region. In such case, the target virtual scene becomes the initial virtual scene, and the second scene-conversion trigger set in the target virtual scene becomes the first scene-conversion trigger set. In embodiments of the present disclosure, conversion among multiple virtual scenes can be achieved, so that a user experiences visually travelling among the virtual scenes. Thereby, adaptability is improved for different services of augmented reality/virtual reality/mixed reality, and application scenarios are expanded for augmented reality/virtual reality/mixed reality.

**In** an optional embodiment, the virtual scene is an augmented reality scene, a virtual reality scene, or a mixed reality scene.

Reference is made to Figure 21, on a basis of Figure 20. Another apparatus is provided according to an embodiment of the present disclosure. The target virtual scene belongs to a virtual scene set, and multiple virtual scenes in the virtual scene set are three-dimensional scenes. The apparatus 2100 further includes a dimensionality reducing module 2004 and an overlaying module 2005.

The dimensionality reducing module 2004 is configured to reduce dimensionality of each three-dimensional scene, to obtain a two-dimensional scene corresponding to said three-dimensional scene.

The overlaying module 2005 is configured to overlay the two-dimensional scenes corresponding to all three-dimensional scenes, to associate different virtual scenes through a scene-conversion trigger.

In embodiments of the present disclosure, dimensionality of the three-dimensional scene is reduced, which is an intermediate process of rendering the virtual scene. Thereby, the multiple three-dimensional scenes are capable to be overlaid, and the multiple virtual scenes are associated through the scene-conversion trigger. In dimensionality reduction, the multiple scenes may be overlaid in sequence, the scene-conversion trigger is disposed in each scene, and a texture of an area corresponding to the scene-conversion trigger is transparent. Hence, partial information of a next scene can be displayed through the scene-conversion trigger.

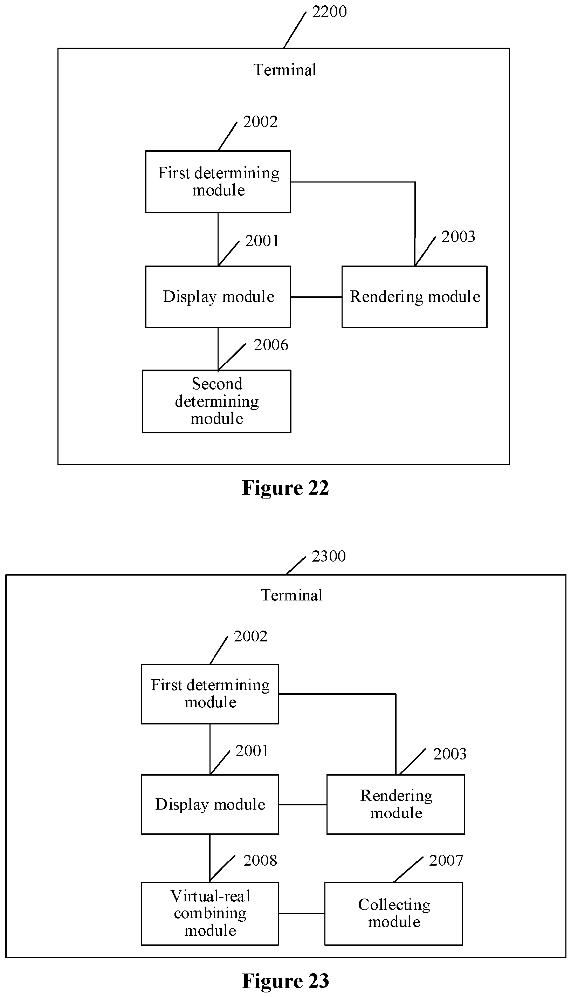

Reference is made to Figure 22, on a basis of Figure 20. Another apparatus is provided according to an embodiment of the apparatus. The screen region includes a first virtual region and a second virtual region. The first virtual region is configured to display the initial virtual scene and the first scene-conversion trigger set, and the second virtual region is configured to display in a current virtual scene the partial information of the target virtual scene. The first virtual region and the second virtual region constitute the entire screen region. The apparatus 2200 further includes a second determining module 2006.

The second determining module 2006 is configured to determine a viewing angle and a position of a virtual object in the initial virtual scene.

The display module 2001 is further configured to: load a first image and a first scene-conversion trigger into the first virtual region, where the first image corresponds to the initial virtual scene under the viewing angle and the position of the virtual object that are determined by the second determining module 2006; and load a second image into the second virtual region, where the second image corresponds to the target virtual scene, which is associated with the initial virtual scene, under the viewing angle and the position of the virtual object.

In this embodiment, images are pre-built at various angles and positions for all virtual scenes. After the terminal determines a real-time angle of the camera and a position of the terminal, the terminal calculates accordingly the viewing angle of the virtual object and the position of the virtual object in the virtual scene, and then directly loads an image corresponding to the viewing angle of the virtual object and the position of the virtual object. A speed of rendering the virtual scene is improved.

Reference is made to Figure 23, on a basis of Figure 20. Another apparatus is provided according to an embodiment of the apparatus. The initial virtual scene includes a real scene, and the apparatus 2300 further includes a collecting module 2007 and a virtual-real combining module 2008.

The collecting module 2007 is configured to collect a first real-scene image in the real scene via a camera.

The virtual-real combining module 2008 is configured to overlay at least two first scene-conversion triggers and partial information of at least two target virtual scenes, onto the first real-scene image collected by the collecting module 2007, to obtain a hybrid virtual-real image.

The display module 2001 is further configured to display the hybrid virtual-real image processed by the virtual-real combining module 2008

This embodiment of the present disclosure is for an augmented reality scene. The initial virtual scene includes the real scene, and the initial virtual scene includes the hybrid virtual-real image.

In an optional embodiment, the initial virtual scene is associated with at least two first scene-conversion triggers, and one of the at least two first scene-conversion triggers is a virtual-real scene-conversion trigger for conversion between a virtual scene and a real scene.

The collecting module 2007 is configured to collect a second real-scene image in the real scene via a camera.

The virtual-real combining module 2008 is configured to overlay, at a position of the virtual-real scene-conversion trigger, the second real-scene image collected by the collecting module 2007.

In another optional embodiment, the collecting module 2007 is further configured to, collect a third real-scene image in the real scene according to a real-time angle and a position of the camera, when the virtual-real scene-conversion trigger in the initial virtual scene is determined to be triggered.

The display module 2001 is configured to display the third real-scene image of the real scene.

In embodiments of the present disclosure, the virtual-real scene-conversion trigger is configured to associate the real scene. When the virtual-real scene-conversion trigger is triggered, the terminal converts the initial virtual scene into the real scene.

In another optional embodiment, two scene-conversion triggers that are spatially adjacent are associated with the same target virtual scene, and every two scene-conversion triggers that are spatially adjacent are arranged in series.

In another optional embodiment, the first determining module 2002 is further configured to: determine to trigger the first scene-conversion trigger in the initial virtual scene, and determine the first target virtual scene that is associated with the initial virtual scene through the first scene-conversion trigger, when the virtual object reaches a position of the first scene-conversion trigger.

The rendering module 2003 is further configured to render a first target virtual scene and the second scene-conversion trigger associated with the first target virtual scene, when the determined target virtual scene is the first target virtual scene.

The display module 2001 is further configured to display, in the screen region, the first target virtual scene and the second scene-conversion trigger associated with the first target virtual scene, where the first target virtual scene is determined to be the initial virtual scene, and the second scene-conversion trigger associated with the first target virtual scene is determined to be the first scene-conversion trigger in the initial virtual scene.

In another optional embodiment, the first determining module 2002 is further configured to determine to trigger the first scene-conversion trigger in the initial virtual scene, when the virtual object reaches the position of the first scene-conversion trigger in the initial virtual scene.

The first determining module 2002 is further configured to determine to convert the initial virtual scene into a second target virtual scene that is associated with the first scene-conversion trigger in the initial virtual scene, and determine the second scene-conversion trigger associated with the second target virtual scene, according to the first scene-conversion trigger.

The rendering module 2003 is further configured to render the second target virtual scene and the second scene-conversion trigger associated with the second target virtual scene, and display, in the screen region, the second target virtual scene and the second scene-conversion trigger associated with the second target virtual scene, where the second target virtual scene is determined to be the initial virtual scene, and the second scene-conversion trigger associated with the second target virtual scene is determined to be the first scene-conversion trigger in the initial virtual scene.

In another optional embodiment, the initial virtual scene includes at least two first scene-conversion triggers arranged in parallel.

The display module 2001 is further configured to display, in the screen region, the at least two first scene-conversion triggers in the initial virtual scene.

The rendering module 2003 is further configured to render the partial information of a target virtual scene at a position of each first scene-conversion trigger that is displayed by the display module 2001, where the initial virtual scene is associated with different target virtual scenes, which are rendered at the positions of different first scene-conversion triggers, through the corresponding first scene-conversion trigger.

The display module 2001 is further configured to display the initial virtual scene, each first scene-conversion trigger, and the target virtual scenes rendered at the position of said first scene-conversion trigger.

In another optional embodiment, the first determining module 2002 is further configured to determine, when the virtual object reaches a position of any designated one of the at least two first scene-conversion triggers, the target virtual scene and the second scene-conversion trigger associated with the target virtual scene based on the initial virtual scene and the designated first scene-conversion trigger.

In another optional embodiment, the rendering module 2003 is further configured to render multiple different target virtual scenes in a same coordinate system, where the target virtual scenes belong to a virtual scene set. In this embodiment of the present disclosure, different virtual scenes are rendered in the same coordinate system. Objects in each world are independent. The objects in the initial world may be directly observed, and the objects in other worlds need to be observed through one or more corresponding portals. Since all worlds share the same coordinate system, different worlds in the same space may be provided with independent objects, and rendering of the objects in different worlds does not interfere with each other.

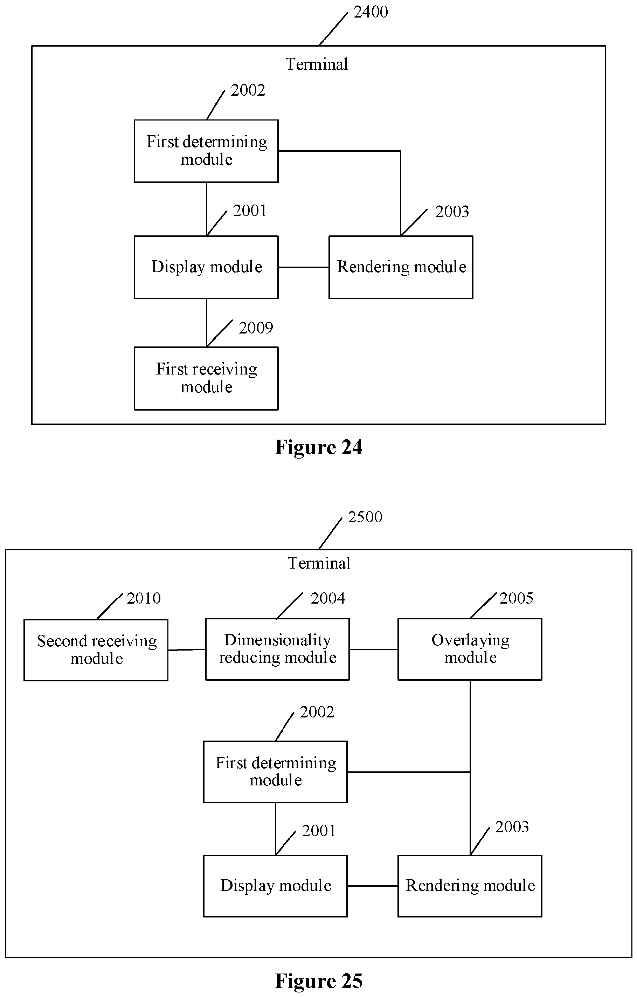

Reference is made to Figure 24, on a basis of Figure 20. Another apparatus is provided according to an embodiment of the present disclosure. The partial information of the target virtual scene further includes index information of multiple target virtual scenes, and the apparatus 2400 further includes a first receiving module 2009.

The display module 2001 is further configured to display the index information of the multiple target virtual scenes.

The first receiving module 2009 is configured to receive a selection operation for selecting a target virtual scene, where the selection operation is inputted through the index information displayed by the display module 2001.

The rendering module 2003 is configured to render the selected target virtual scene according to the selection operation received by the receiving module 2009.

In another optional embodiment, the apparatus further includes a path determining module, when there are X virtual scenes between the initial virtual scene and the selected target virtual scene in the virtual scene set, where X is a natural number. The path determining module is configured to determine, according to the selection operation, a path for rendering the selected target virtual scene, where the path includes the X virtual scenes.

The rendering module 2003 is further configured to render the X virtual scenes layer by layer, according to the selection operation, until rendering the selected target virtual scene.

In this embodiment, the terminal may display the index information. The index information is configured provide an index for a user to select a virtual scene. The user may perform a selection operation according to the index information. The terminal may render directly the target virtual scene selected by the user. Or, the terminal may render the selected target virtual scene through the path, so that the user experiences visually travelling to the selected target virtual scene directly. Application scenarios are expanded for different services.

Reference is made to Figure 25, on a basis of Figure 20. Another apparatus is provided according to an embodiment of the present disclosure. The apparatus further includes a second receiving module 2010.

The second receiving module 2010 is configured to receive the virtual scene set transmitted by a server.

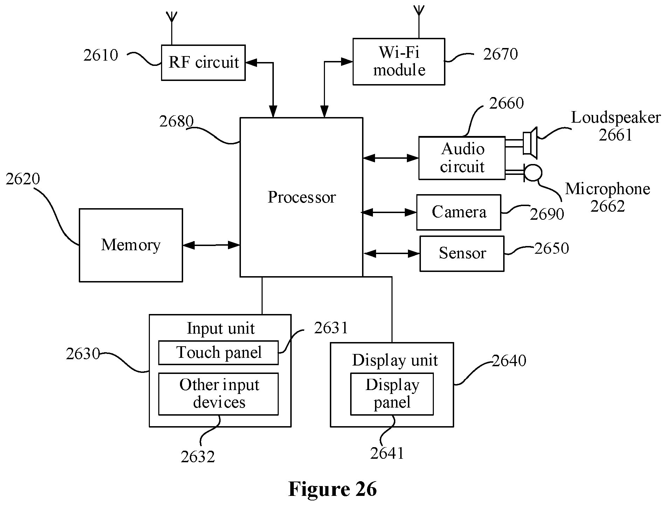

Reference is made to Figure 26. A terminal is further provided according to an embodiment of the present disclosure. Only parts related to embodiments of the present disclosure are shown in Figure 26, to facilitate description. Specific technical details that are not disclosed may refer to the method embodiments of the present disclosure. The terminal may be a terminal device such as a mobile phone, a tablet computer, a personal digital assistant (PDA), VR glasses, a VR helmet, and the like. For example, the terminal is a mobile phone.

Figure 26 is a block diagram of a part of a structure of the mobile phone that is related to the terminal according to this embodiment of the present disclosure. Referring to Figure 26, the mobile phone includes components such as a radio frequency (RF) circuit 2610, a memory 2620, an input unit 2630, a display unit 2640, a sensor 2650, an audio circuit 2660, a wireless fidelity (WiFi) module 2670, a processor 2680, and a camera 2690. The mobile phone is not limited to the structure as shown in Figure 26. The mobile phone may include more or fewer components than those shown in the figure, some components may be combined, a different layout for the components may be applied.

Hereinafter the components of the mobile phone are described in detail in conjunction with Figure 26.

The RF circuit 2610 may be configured to receive and transmit a signal in a process of receiving and transmitting information or a calling process. In particular, the RF circuit 2610 may be configured to receive send downlink information from a base station and send the downlink information to the processor 2680 for processing. In addition, the RF circuit may be configured to send uplink data to the base station. Generally, the RF circuit 2610 includes, but is not limited to, an antenna, at least one amplifier, a transceiver, a coupler, a low noise amplifier (LNA), a duplexer, and the like. The RF circuit 2610 may further communicate with a network and another device through wireless communication. The wireless communication may use any communications standard or protocol, including but not limited to the global system of mobile communication (GSM), the general packet radio service (GPRS), the code division multiple access (CDMA), the wideband code division multiple access (WCDMA), the Long Term Evolution (LTE), an email, a short messaging service (SMS), and the like.

The memory 2620 may be configured to store a software program and a module. The processor 2680 executes various functional applications of the mobile phone and processes data, by running the software program and the module that are stored in the memory 2620. The memory 2620 may mainly include a program storage area and a data storage area. The program storage area may store an operating system, an application program required by at least one function (such as a function of playing an audio and a function of displaying an image). The data storage area may store data (such as audio data and a phone book) created according to usage of the mobile phone. In addition, the memory 2620 may include a high-speed random access memory, and may include a non-volatile memory, such as at least one magnetic disk memory device, a flash memory device, or another non-volatile solid-state memory device.

The input unit 2630 may be configured to receive numeral or character information that is inputted, and generate an input of a key signal related to user setting and function control of the mobile phone. Specifically, the input unit 2630 may include a touch panel 2631 or another input device 2632. The touch panel 2631, also known as a touchscreen, may collect a touch operation performed by the user on or near the touch panel (for example, an operation performed by a user on the touch panel 2631 or near the touch panel 2631 by using any proper object or accessory, such as a finger or a stylus), and drive a corresponding connected apparatus according to a preset program. Optionally, the touch panel 2631 may include two parts: a touch detection apparatus and a touch controller. The touch detection apparatus detects a touch position of a user, detects a signal generated by a touch operation, and transmits the signal to the touch controller. The touch controller receives touch information from the touch detection apparatus, converts the touch information into a touch coordinate, and transmits the touch coordinate to the processor 2680. The touch controller may receive and execute a command transmitted by the processor 2680. In addition, the touch panel 2631 may be implemented in various types, such as a resistor type, a capacitor type, an infrared type, or a surface-acoustic-wave type. The input unit 2630 may include another input device 2632 besides the touch panel 2631. Specifically, the input device 2632 may include, but is not limited to, one or more of a physical keyboard, a function key (such as a volume control key or a power key), a trackball, a mouse, a joystick, or the like.

The display unit 2640 may be configured to display information inputted by a user or information provided to a user, and various menus of the mobile phone. The display unit 2640 may include a display panel 2641. Optionally, the display panel 2641 may be configured in a form such as a liquid crystal display (LCD), an organic light-emitting diode (OLED), or the like. Further, the touch panel 2631 may cover the display panel 2641. After detecting a touch operation on or near the touch panel 2631, the touch panel 2631 reports to the processor 2680 to determine a type of a touch event. Then, the processor 2680 provides corresponding visual output on the display panel 2641 according to the type of the touch event. Although configured as two independent components for input and output functions in Figure 26, the touch panel 2631 and the display panel 2641 may be integrated in some embodiments to implement the input and output functions of the mobile phone.

The mobile phone may further include at least one sensor 2650, for example, a light sensor, a motion sensor, or another sensor. Specifically, the light sensor may include an ambient light sensor and a proximity sensor. The ambient light sensor may adjust luminance of the display panel 2641 according to ambient brightness, and the proximity sensor may turn off the display panel 2641 and/or backlight when the mobile phone moves near an ear. An accelerometer sensor, which is a motion sensor, may detect accelerations in all directions (generally along three axes), and may detect magnitude and a direction of gravity when motionless. The accelerometer sensor may be applied to applications recognizing a mobile phone posture (such as switching between landscape and portrait states, relevant games, and magnetometer posture calibration), or to functions related to recognizing a vibration (such as a pedometer, and knocking). Other sensors such as gyroscopes, barometers, hygrometers, thermometers, and infrared sensors may be further provided to the mobile phone, which is not described in detail herein.

The audio circuit 2660, a loudspeaker 2661, and a microphone 2662 may provide audio interfaces between a user and the mobile phone. The audio circuit 2660 may transmit an electrical signal to the loudspeaker 2661, after converting received audio data. The loudspeaker 2661 converts the electrical signal into a voice signal for outputting. Moreover, the microphone 2662 converts a collected sound signal into an electrical signal. The audio circuit 2660 converts the electrical signal into audio data after receiving the electrical signal, and then outputs the audio data. Afterwards, the audio data is processed by the processor 2680, and is transmitted through the RF circuit 2610 to, for example, another mobile phone. Or, the audio data is outputted to the memory 2620 for further processing.

WiFi belongs to near field communication technology. The mobile phone may apply a WiFi module 2670 to help a user send or receive an email, browse a webpage, access streaming media, and the like. The WiFi module provides the user a wireless broadband access to the Internet. The WiFi module 2670, although shown in Figure 26, is a dispensable component of the mobile phone, and may be omitted on requirements without changing an essence of the present disclosure.

The processor 2680 is a control center of the mobile phone, and is connected to all parts of the entire mobile phone via various interfaces and lines. The processor 2680 runs or executes software program and/or module stored in the memory 2620, and invokes data stored in the memory 2620, so as implement various functions and data processing of the mobile phone and monitor the whole the mobile phone. Optionally, the processor 2680 may include one or more processing units. Preferably, an application processor and a modem processor may be integrated into the processor 2680. The application processor is mainly configured to process an operating system, a user interface, an application program, or the like. The modem processor is mainly configured to process wireless communications. The modem processor may not be integrated into the processor 2680.

The mobile phone includes a camera 2690, which is configured to collect images in the initial scene. In embodiments of the present disclosure, the processor 2680 included in the terminal is further configured with a following function.

The processor is configured to enable the terminal to perform the method according to the foregoing method embodiments.

Specifically, the processor 2680 configures the terminal to perform the following steps.

An initial virtual scene, a first scene-conversion trigger set, and partial information of a target virtual scene are displayed in a screen region, where a scene-conversion trigger is for implementing conversion between different virtual scenes that are associated, and the first scene-conversion trigger set includes a first scene-conversion trigger associated with the initial virtual scene. The target virtual scene and a second scene-conversion trigger set are determined based on a trigger operation on the first scene-conversion trigger, when the trigger operation is received, where the second scene-conversion trigger set includes multiple second scene-conversion triggers associated with the determined target virtual scene.

The determined target virtual scene and the determined second scene-conversion trigger set are rendered, and are displayed in the screen region.

In an optional embodiment, the virtual scene is an augmented reality scene, a virtual reality scene, or a mixed reality scene.

In an optional embodiment, the target virtual scene belongs to a virtual scene set, and multiple virtual scenes in the virtual scene set are three-dimensional scenes. The method further includes following steps, before the initial virtual scene, the first scene-conversion trigger set, and the partial information of the target virtual scene are displayed in a screen region.

Dimensionality of each three-dimensional scene is reduced to obtain a two-dimensional scene corresponding to said three-dimensional scene.

The two-dimensional scenes corresponding to all three-dimensional scenes are overlaid, to associate different virtual scenes through a scene-conversion trigger.

In an optional embodiment, the screen region includes a first virtual region and a second virtual region. The first virtual region is configured to display the initial virtual scene and the first scene-conversion trigger set, and the second virtual region is configured to display in a current virtual scene the partial information of the target virtual scene. The first virtual region and the second virtual region constitute the entire screen region. Displaying the initial virtual scene, the first scene-conversion trigger set, and the partial information of the target virtual scene in a screen region includes following steps.

A viewing angle and a position, of a virtual object in the initial virtual scene, are determined.

A first image and a first scene-conversion trigger are loaded into the first virtual region, where the first image corresponds to the initial virtual scene under the viewing angle and the position of the virtual object.

A second image is loaded into the second virtual region, where the second image corresponds to the target virtual scene, which is associated with the initial virtual scene, under the viewing angle and the position of the virtual object.

In an optional embodiment, the method further includes following steps.

A first real-scene image in a real scene is collected via a camera, when the initial virtual scene includes the real scene.

At least two first scene-conversion triggers and partial information of at least two target virtual scenes are overlaid onto the first real-scene image, to obtain a hybrid virtual-real image.

The hybrid virtual-real image is displayed.

In an optional embodiment, the initial virtual scene is associated with at least two first scene-conversion triggers, and one of the at least two first scene-conversion triggers is a virtual-real scene-conversion trigger for conversion between a virtual scene and a real scene. The method further includes following steps.

A second real-scene image in the real scene is collected via a camera.

The second real-scene image is overlaid at a position of the virtual-real scene-conversion trigger.

In an optional embodiment, the method further includes following steps.

A third real-scene image in the real scene is collected according to a real-time angle and a position of the camera, when the virtual-real scene-conversion trigger in the initial virtual scene is determined to be triggered.

The third real-scene image in the real scene is displayed.

In an optional embodiment, two scene-conversion triggers that are spatially adjacent are associated with the same target virtual scene, and every two scene-conversion triggers that are spatially adjacent are arranged in series.

In an optional embodiment, receiving the trigger operation on the first scene-conversion trigger includes a following step.

The first scene-conversion trigger in the initial virtual scene is determined to be triggered, when the virtual object reaches a position of the first scene-conversion trigger.

In an optional embodiment, rendering the determined target virtual scene and the determined second scene-conversion trigger set and displaying the determined target virtual scene and the determined second scene-conversion trigger set in the screen region includes following steps, when the determined target virtual scene is a first target virtual scene.

The first target virtual scene and the second scene-conversion trigger associated with the first target virtual scene are rendered and displayed in the screen region. The first target virtual scene is determined to be the initial virtual scene, and the second scene-conversion trigger associated with the first target virtual scene is determined to be the first scene-conversion trigger in the initial virtual scene.

In an optional embodiment, the method further includes a following step.

The first scene-conversion trigger in the initial virtual scene is determined to be triggered, when the virtual object reaches the position of the first scene-conversion trigger in the initial virtual scene.

The initial virtual scene is determined to be converted into a second target virtual scene that is associated with the first scene-conversion trigger in the initial virtual scene, and the second scene-conversion trigger associated with the second target virtual scene is determined, according to the first scene-conversion trigger.

The second target virtual scene and the second scene-conversion trigger associated with the second target virtual scene are rendered and displayed in the screen region.

The second target virtual scene is determined to be the initial virtual scene, and the second scene-conversion trigger associated with the second target virtual scene is determined to be the first scene-conversion trigger in the initial virtual scene.

In an optional embodiment, the initial virtual scene includes at least two first scene-conversion triggers arranged in parallel.

Displaying the initial virtual scene, the first scene-conversion trigger set, and the partial information of the target virtual scene in the screen region includes following steps.

The at least two first scene-conversion triggers in the initial virtual scene are displayed in the screen region.

The partial information of a target virtual scene is rendered at a position of each first scene-conversion trigger, where the initial virtual scene is associated with different target virtual scenes, which are rendered at the positions of different first scene-conversion triggers, through the corresponding first scene-conversion trigger.

The initial virtual scene, each first scene-conversion trigger, and the target virtual scenes rendered at the position of said first scene-conversion trigger are displayed.

**In** an optional embodiment, the method further includes a following step.

The target virtual scene and the second scene-conversion trigger associated with the target virtual scene are determined based on the initial virtual scene and any designated one of the at least two first scene-conversion triggers, when the virtual object reaches a position of said designated first scene-conversion trigger.

In an optional embodiment, the method further includes a following step.

Multiple different target virtual scenes are rendered in a same coordinate system, where the target virtual scenes belong to the virtual scene set.

In an optional embodiment, the partial information of the target virtual scene further includes index information of the target virtual scene, and the method further includes following steps.

The index information of the target virtual scenes is displayed.

A selection operation for selecting a target virtual scene is received, where the selection operation is inputted through the index information

The selected target virtual scene is rendered according to the selection operation.

In an optional embodiment, the method further includes following steps before the selected target virtual scene is rendered according to the selection operation, when there are X virtual scenes between the initial virtual scene and the selected target virtual scene in the virtual scene set, where X is a natural number.

A path for rendering the selected target virtual scene is determined according to the selection operation, where the path includes the X virtual scenes.

The X virtual scenes are rendered layer by layer according to the selection operation, until rendering the selected target virtual scene.

In an optional embodiment, the method further includes a following step, when the target virtual scene belongs to the virtual scene set.

The virtual scene set transmitted by a server is received.

A computer storage medium is further provided according to an embodiment of the present disclosure. The computer storage medium is configured to store a computer software instruction for a terminal, and includes a program to be executed by an apparatus for implementing scene conversion according to forgoing embodiments.

It can be clearly appreciated by those skilled in the art that a detailed working process of the foregoing system, apparatus, and unit may refer to a corresponding process in the foregoing method embodiments, and details are not described again herein for brevity.

In several embodiments provided in the present disclosure, the disclosed system, apparatus, and method may be implemented in other manners. For example, the described apparatus embodiments are merely exemplary. For example, division of the units is merely logical, and may be implemented in other forms in practice. For example, multiple units or components may be combined or integrated into another system, or some features may be ignored or not performed. In addition, the displayed or discussed mutual couplings, direct couplings or communication connections may be implemented via some interfaces. The indirect couplings or the communication connections between the apparatuses or units may be electrical, mechanical, or in other forms.

The units described as separate parts may or may not be physically separate, and parts displayed as units may or may not be physical units. They may be located in one position, or may be distributed on multiple network units. Some or all of the units may be selected on requirement to achieve objectives of solutions of the embodiments.

In addition, functional units in embodiments of the present disclosure may be integrated into one processing unit, or each of the units may be physically independent, or two or more units may be integrated as one. The integrated unit may be implemented in a form of hardware, or may be implemented in a form of a software functional unit.

The integrated unit may be stored in a computer-readable storage medium, when being implemented in the form of the software functional unit and sold or used as an independent product. Based on such an understanding, an essence, a part contributing to conventional technology, or the whole of the technical solutions of the present disclosure may be implemented in the form of a software product. The software product is stored in a storage medium, and includes several instructions for instructing a computer device (which may be a personal computer, a server, or a network device) to perform all or some of steps of the methods described in embodiments of the present disclosure. The storage medium includes any medium that can store a program code, such as a USB flash drive, a removable hard disk, a read-only memory (ROM, Read-Only Memory), a random access memory (RAM, Random Access Memory), a magnetic disk, or an optical disk.

## Claims

1. A method for implementing virtual scene conversion, wherein the method comprises:
displaying (101), in a screen region, an initial virtual scene, a first scene-conversion trigger set, and partial information of a target virtual scene, wherein a scene-conversion trigger is configured for conversion between different virtual scenes that are associated, and the first scene-conversion trigger set comprises a first scene-conversion trigger associated with the initial virtual scene;
determining (102), when a trigger operation on the first scene-conversion trigger is received, the target virtual scene and a second scene-conversion trigger set based on the trigger operation, wherein the second scene-conversion trigger set comprises a plurality of second scene-conversion triggers associated with the determined target virtual scene;
rendering (103) the determined target virtual scene and the determined second scene-conversion trigger set; and
displaying (103), in the screen region, the determined target virtual scene and the determined second scene-conversion trigger set;
wherein each of the initial virtual scene, the target virtual scene, and the another target virtual scene is a pre-built three-dimensional scene;
wherein:
the screen region comprises a first virtual region and a second virtual region;
the first virtual region is configured to display the initial virtual scene and the first scene-conversion trigger set, and the second virtual region is configured to display in a current virtual scene the partial information of the target virtual scene;
first virtual region and the second virtual region constitute the entire screen region; and
displaying the initial virtual scene, the first scene-conversion trigger set, and the partial information of the target virtual scene in the screen region comprises:
determining a viewing angle and a position of a virtual object in the initial virtual scene;
loading a first image and a first scene-conversion trigger into the first virtual region, wherein the first image corresponds to the initial virtual scene under the viewing angle and the position of the virtual object; and
loading a second image into the second virtual region, wherein the second image corresponds to the target virtual scene, which is associated with the initial virtual scene, under the viewing angle and the position of the virtual object.

2. The method according to claim 1, wherein the target virtual scene belongs to a virtual scene set, and a plurality of virtual scenes in the virtual scene set are three-dimensional scenes; and
wherein before displaying (101) the initial virtual scene, the first scene-conversion trigger set, and the partial information of the target virtual scene in the screen region, the method further comprises:
reducing (502)dimensionality of each three-dimensional scene, to obtain a two-dimensional scene corresponding to said three-dimensional scene; and
overlaying (503) the two-dimensional scenes corresponding to all three-dimensional scenes, to associate different virtual scenes through a scene-conversion trigger.

3. The method according to claim 1, further comprising:
collecting a first real-scene image in a real scene via a camera, when the initial virtual scene comprises the real scene,;
overlaying at least two first scene-conversion triggers and partial information of at least two target virtual scenes, onto the first real-scene image, to obtain a hybrid virtual-real image; and
displaying the hybrid virtual-real image.

4. The method according to claim 1, wherein the initial virtual scene is associated with at least two first scene-conversion triggers, and one of the at least two first scene-conversion triggers is a virtual-real scene-conversion trigger for conversion between a virtual scene and a real scene; and
wherein the method further comprises:
collecting a second real-scene image in the real scene via a camera; and
overlaying the second real-scene image at a position of the virtual-real scene-conversion trigger.

5. The method according to claim 5, further comprising:
collecting a third real-scene image in the real scene according to a real-time angle and a position of the camera, when the virtual-real scene-conversion trigger in the initial virtual scene is determined to be triggered; and
displaying the third real-scene image of the real scene.

6. The method according to claim 1, wherein two scene-conversion triggers that are spatially adjacent are associated with the same target virtual scene, and every two scene-conversion triggers that are spatially adjacent are arranged in series.

7. The method according to claim 6, wherein receiving the trigger operation on the first scene-conversion trigger comprises:
determining to trigger the first scene-conversion trigger in the initial virtual scene, when the virtual object reaches a position of the first scene-conversion trigger.

8. The method according to claim 7, wherein the determined target virtual scene is a first target virtual scene, and
wherein rendering the determined target virtual scene and the determined second scene-conversion trigger set and displaying the determined target virtual scene and the determined second scene-conversion trigger set in the screen region comprises:
rendering the first target virtual scene and the second scene-conversion trigger associated with the first target virtual scene;
displaying, in the screen region, the first target virtual scene and the second scene-conversion trigger associated with the first target virtual scene; and
determining the first target virtual scene to be the initial virtual scene, and determining the second scene-conversion trigger associated with the first target virtual scene to be the first scene-conversion trigger in the initial virtual scene.

9. The method according to claim 8, further comprising:
determining to trigger the first scene-conversion trigger in the initial virtual scene, when the virtual object reaches the position of the first scene-conversion trigger in the initial virtual scene;
determining to convert the initial virtual scene into a second target virtual scene that is associated with the first scene-conversion trigger in the initial virtual scene, and determining the second scene-conversion trigger associated with the second target virtual scene, according to the first scene-conversion trigger;
rendering the second target virtual scene and the second scene-conversion trigger associated with the second target virtual scene;
displaying, in the screen region, the second target virtual scene and the second scene-conversion trigger associated with the second target virtual scene; and
determining the second target virtual scene to be the initial virtual scene, and determining the second scene-conversion trigger associated with the second target virtual scene to be the first scene-conversion trigger in the initial virtual scene.

10. The method according to any one of claims 1 to 9, further comprising:
rendering a plurality of different target virtual scenes in a same coordinate system, wherein the target virtual scenes belong to a virtual scene set.

11. The method according to any one of claims 1 to 9, wherein the partial information of the target virtual scene further comprises index information of the target virtual scene, and
wherein the method further comprises:
displaying the index information of the target virtual scene;
receiving a selection operation for selecting a target virtual scene, wherein the selection operation is inputted through the index information; and
rendering the selected target virtual scene according to the selection operation.

12. The method according to claim 11, wherein there are X virtual scenes between the initial virtual scene and the selected target virtual scene, and X is a natural number, and
wherein before rendering the selected target virtual scene according to the selection operation, the method further comprises:
determining, according to the selection operation, a path for rendering the selected target virtual scene, wherein the path comprises the X virtual scenes; and
rendering the X virtual scenes layer by layer, according to the selection operation, until rendering the selected target virtual scene.

13. A terminal, comprising:
a memory, configured to store a computer-executable program code;
a transceiver; and
a processor, coupled to the memory and the transceiver;
wherein the program code comprises an instruction, and the instruction when executed by the processor configures the terminal to perform the method according to any one of claims 1 to 12.

14. A computer storage medium, storing a computer software instruction for a terminal, wherein the instruction comprises a program for performing the method according to any one of claims 1 to 12.

## Patentansprüche

1. Verfahren zum Implementieren einer virtuellen Szenenumwandlung, wobei das Verfahren Folgendes umfasst:
Anzeigen (101), in einem Bildschirmbereich, einer anfänglichen virtuellen Szene, eines ersten Szenenumwandlungsauslösersatzes und von Teilinformationen einer virtuellen Zielszene, wobei ein Szenenumwandlungsauslöser zur Umwandlung zwischen verschiedenen virtuellen Szenen, die assoziiert sind, konfiguriert ist und der erste Szenenumwandlungsauslösersatz einen ersten Szenenumwandlungsauslöser umfasst, der mit der anfänglichen virtuellen Szene assoziiert ist;
Bestimmen (102), wenn eine Auslöseoperation auf dem ersten Szenenumwandlungsauslöser empfangen wird, der virtuellen Zielszene und eines zweiten Szenenumwandlungsauslösersatzes basierend auf der Auslöseoperation, wobei der zweite Szenenumwandlungsauslösersatz mehrere zweite Szenenumwandlungsauslöser umfasst, die mit der bestimmten virtuellen Zielszene assoziiert sind;
Rendern (103) der bestimmten virtuellen Zielszene und des bestimmten zweiten Szenenumwandlungsauslösersatzes; und
Anzeigen (103), in dem Bildschirmbereich, der bestimmten virtuellen Zielszene und des bestimmten zweiten Szenenumwandlungsauslösersatzes;
wobei sowohl die anfängliche virtuelle Szene als auch die virtuelle Zielszene und die andere virtuelle Zielszene eine vorgebaute dreidimensionale Szene ist;
wobei:
der Bildschirmbereich einen ersten virtuellen Bereich und einen zweiten virtuellen Bereich umfasst;
der erste virtuelle Bereich dazu konfiguriert ist, die anfängliche virtuelle Szene und den ersten Szenenumwandlungsauslösersatz anzuzeigen, und der zweite virtuelle Bereich dazu konfiguriert ist, in einer aktuellen virtuellen Szene die Teilinformationen der virtuellen Zielszene anzuzeigen;
der erste virtuelle Bereich und der zweite virtuelle Bereich den gesamte Bildschirmbereich bilden; und
das Anzeigen der anfänglichen virtuellen Szene, des ersten Szenenumwandlungsauslösersatzes und der Teilinformationen der virtuellen Zielszene in dem Bildschirmbereich Folgendes umfasst:
Bestimmen eines Betrachtungswinkels und einer Position eines virtuellen Objekts in der anfänglichen virtuellen Szene;
Laden eines ersten Bildes und eines ersten Szenenumwandlungsauslösers in den ersten virtuellen Bereich, wobei das erste Bild der anfänglichen virtuellen Szene unter dem Betrachtungswinkel und der Position des virtuellen Objekts entspricht; und
Laden eines zweiten Bildes in den zweiten virtuellen Bereich, wobei das zweite Bild der virtuellen Zielszene, die mit der anfänglichen virtuellen Szene assoziiert ist, unter dem Betrachtungswinkel und der Position des virtuellen Objekts entspricht.

2. Verfahren nach Anspruch 1, wobei die virtuelle Zielszene zu einem Satz virtueller Szenen gehört und mehrere virtuelle Szenen in dem Satz virtueller Szenen dreidimensionale Szenen sind; und
wobei das Verfahren vor dem Anzeigen (101) der anfänglichen virtuellen Szene, des ersten Szenenumwandlungsauslösersatzes und der Teilinformationen der virtuellen Zielszene in dem Bildschirmbereich ferner Folgendes umfasst:
Reduzieren (502) der Dimensionalität jeder dreidimensionalen Szene, um eine zweidimensionale Szene zu erhalten, die der dreidimensionalen Szene entspricht; und
Überlagern (503) der zweidimensionalen Szenen, die allen dreidimensionalen Szenen entsprechen, um verschiedene virtuelle Szenen durch einen Szenenumwandlungsauslöser zu assoziieren.

3. Verfahren nach Anspruch 1, ferner umfassend:
Sammeln eines ersten Realszenenbildes in einer realen Szene über eine Kamera, wenn die anfängliche virtuelle Szene die reale Szene umfasst;
Überlagern von mindestens zwei ersten Szenenumwandlungsauslösern und Teilinformationen von mindestens zwei virtuellen Zielszenen auf das erste Realszenenbild, um ein hybrides virtuell-reales Bild zu erhalten; und
Anzeigen des hybriden virtuell-realen Bildes.

4. Verfahren nach Anspruch 1, wobei die anfängliche virtuelle Szene mit mindestens zwei ersten Szenenumwandlungsauslösern assoziiert ist und einer der mindestens zwei ersten Szenenumwandlungsauslöser ein virtuell-realer Szenenumwandlungsauslöser zur Umwandlung zwischen einer virtuellen Szene und einer realen Szene ist; und
wobei das Verfahren ferner Folgendes umfasst:
Sammeln eines zweiten Realszenenbildes in der realen Szene über eine Kamera; und
Überlagern des zweiten Realszenenbildes an einer Position des virtuell-realen Szenenumwandlungsauslösers.

5. Verfahren nach Anspruch 5, ferner umfassend:
Sammeln eines dritten Realszenenbildes in der Realszene gemäß einem Echtzeitwinkel und einer Position der Kamera, wenn bestimmt wird, dass der virtuell-reale Szenenumwandlungsauslöser in der anfänglichen virtuellen Szene auszulösen ist; und
Anzeigen des dritten Realszenenbildes der realen Szene.

6. Verfahren nach Anspruch 1, wobei zwei Szenenumwandlungsauslöser, die räumlich benachbart sind, mit derselben virtuellen Zielszene assoziiert sind und alle zwei Szenenumwandlungsauslöser, die räumlich benachbart sind, in Reihe angeordnet sind.

7. Verfahren nach Anspruch 6, wobei das Empfangen der Auslöseoperation an dem ersten Szenenumwandlungsauslöser Folgendes umfasst:
Bestimmen, den ersten Szenenumwandlungsauslöser in der anfänglichen virtuellen Szene auszulösen, wenn das virtuelle Objekt eine Position des ersten Szenenumwandlungsauslösers erreicht.

8. Verfahren nach Anspruch 7, wobei die bestimmte virtuelle Zielszene eine erste virtuelle Zielszene ist, und
wobei das Rendern der bestimmten virtuellen Zielszene und des bestimmten zweiten Szenenumwandlungsauslösersatzes und das Anzeigen der bestimmten virtuellen Zielszene und des bestimmten zweiten Szenenumwandlungsauslösersatzes in dem Bildschirmbereich Folgendes umfasst:
Rendern der ersten virtuellen Zielszene und des zweiten Szenenumwandlungsauslösers, der mit der ersten virtuellen Zielszene assoziiert ist;
Anzeigen, in dem Bildschirmbereich, der ersten virtuellen Zielszene und des zweiten Szenenumwandlungsauslösers, der mit der ersten virtuellen Zielszene assoziiert ist; und
Bestimmen der ersten virtuellen Zielszene als die anfängliche virtuelle Szene und Bestimmen des zweiten Szenenumwandlungsauslösers, der mit der ersten virtuellen Zielszene assoziiert ist, als den ersten Szenenumwandlungsauslöser in der anfänglichen virtuellen Szene.

9. Verfahren nach Anspruch 8, ferner umfassend:
Bestimmen, den ersten Szenenumwandlungsauslöser in der anfänglichen virtuellen Szene auszulösen, wenn das virtuelle Objekt die Position des ersten Szenenumwandlungsauslösers in der anfänglichen virtuellen Szene erreicht;
Bestimmen, die anfängliche virtuelle Szene in eine zweite virtuelle Zielszene umzuwandeln, die mit dem ersten Szenenumwandlungsauslöser in der anfänglichen virtuellen Szene assoziiert ist, und Bestimmen des zweiten Szenenumwandlungsauslösers, der mit der zweiten virtuellen Zielszene assoziiert ist, gemäß dem ersten Szenenumwandlungsauslöser;
Rendern der zweiten virtuellen Zielszene und des zweiten Szenenumwandlungsauslösers, der mit der zweiten virtuellen Zielszene assoziiert ist;
Anzeigen, in dem Bildschirmbereich, der zweiten virtuellen Zielszene und des zweiten Szenenumwandlungsauslösers, der mit der zweiten virtuellen Zielszene assoziiert ist; und
Bestimmen der zweiten virtuellen Zielszene als die anfängliche virtuelle Szene und Bestimmen des zweiten Szenenumwandlungsauslösers, der mit der zweiten virtuellen Zielszene assoziiert ist, als den ersten Szenenumwandlungsauslöser in der anfänglichen virtuellen Szene.

10. Verfahren nach einem der Ansprüche 1 bis 9, ferner umfassend:
Rendern mehrerer verschiedener virtueller Zielszenen in einem gleichen Koordinatensystem, wobei die virtuellen Zielszenen zu einem Satz virtueller Szenen gehören.

11. Verfahren nach einem der Ansprüche 1 bis 9, wobei die Teilinformationen der virtuellen Zielszene ferner Indexinformationen der virtuellen Zielszene umfassen, und
wobei das Verfahren ferner Folgendes umfasst:
Anzeigen der Indexinformationen der virtuellen Zielszene;
Empfangen einer Auswahloperation zum Auswählen einer virtuellen Zielszene, wobei die Auswahloperation durch die Indexinformationen eingegeben wird; und
Rendern der ausgewählten virtuellen Zielszene gemäß der Auswahloperation.

12. Verfahren nach Anspruch 11, wobei es X virtuelle Szenen zwischen der anfänglichen virtuellen Szene und der ausgewählten virtuellen Zielszene gibt und X eine natürliche Zahl ist, und
wobei das Verfahren vor dem Rendern der ausgewählten virtuellen Zielszene gemäß der Auswahloperation ferner Folgendes umfasst:
Bestimmen, gemäß der Auswahloperation, eines Pfads zum Rendern der ausgewählten virtuellen Zielszene, wobei der Pfad die X virtuellen Szenen umfasst; und
schichtweises Rendern der X virtuellen Szenen gemäß der Auswahloperation bis zum Rendern der ausgewählten virtuellen Zielszene.

13. Endgerät, umfassend:
einen Speicher, der dazu konfiguriert ist, einen computerausführbaren Programmcode zu speichern;
einen Transceiver; und
einen Prozessor, der mit dem Speicher und dem Transceiver gekoppelt ist;
wobei der Programmcode eine Anweisung umfasst und die Anweisung, wenn sie durch den Prozessor ausgeführt wird, das Endgerät konfiguriert, um das Verfahren nach einem der Ansprüche 1 bis 12 durchzuführen.

14. Computerspeichermedium, das eine Computersoftwareanweisung für ein Endgerät speichert, wobei die Anweisung ein Programm zum Durchführen des Verfahrens nach einem der Ansprüche 1 bis 12 umfasst.

## Revendications

1. Procédé de mise en œuvre d'une conversion de scène virtuelle, le procédé comprenant les étapes suivantes :
afficher (101), dans une région de l'écran, une scène virtuelle initiale, un premier ensemble de déclencheurs de conversion de scène, et des informations partielles d'une scène virtuelle cible, où un déclencheur de conversion de scène est configuré pour une conversion entre différentes scènes virtuelles qui sont associées, et le premier ensemble de déclencheurs de conversion de scène comprend un premier déclencheur de conversion de scène associé à la scène virtuelle initiale ;
déterminer (102), lorsqu'une opération de déclenchement sur le premier déclencheur de conversion de scène est reçue, la scène virtuelle cible et un deuxième ensemble de déclencheurs de conversion de scène sur la base de l'opération de déclenchement, où le deuxième ensemble de déclencheurs de conversion de scène comprend une pluralité de deuxièmes déclencheurs de conversion de scène associés à la scène virtuelle cible déterminée ;
effectuer le rendu (103) de la scène virtuelle cible déterminée et du deuxième ensemble de déclencheurs de conversion de scène déterminé ; et afficher (103), dans la région d'écran, la scène virtuelle cible déterminée et le deuxième ensemble de déclencheurs de conversion de scène déterminé ;
où la scène virtuelle initiale, la scène virtuelle cible et l'autre scène virtuelle cible sont des scènes tridimensionnelles préconstruites ;
où :
la région d'écran comprend une première région virtuelle et une deuxième région virtuelle ;
la première région virtuelle est configurée pour afficher la scène virtuelle initiale et le premier ensemble de déclencheurs de conversion de scène, et la deuxième région virtuelle est configurée pour afficher dans une scène virtuelle courante les informations partielles de la scène virtuelle cible ;
la première région virtuelle et la deuxième région virtuelle constituent la totalité de la région d'écran ; et
l'affichage de la scène virtuelle initiale, du premier ensemble de déclencheurs de conversion de scène et des informations partielles de la scène virtuelle cible dans la région d'écran comprend les étapes suivantes :
déterminer un angle de vue et une position d'un objet virtuel dans la scène virtuelle initiale ;
charger une première image et un premier déclencheur de conversion de scène dans la première région virtuelle, la première image correspondant à la scène virtuelle initiale sous l'angle de vue et la position de l'objet virtuel ; et
charger une deuxième image dans la deuxième région virtuelle, la deuxième image correspondant à la scène virtuelle cible, qui est associée à la scène virtuelle initiale, sous l'angle de vue et la position de l'objet virtuel.

2. Procédé selon la revendication 1, dans lequel la scène virtuelle cible appartient à un ensemble de scènes virtuelles, et une pluralité de scènes virtuelles dans l'ensemble de scènes virtuelles sont des scènes tridimensionnelles ; et
où, avant d'afficher (101) la scène virtuelle initiale, le premier ensemble de déclencheurs de conversion de scène, et les informations partielles de la scène virtuelle cible dans la région d'écran, le procédé comprend en outre les étapes suivantes :
réduire (502) la dimensionnalité de chaque scène tridimensionnelle, pour obtenir une scène bidimensionnelle correspondant à ladite scène tridimensionnelle ; et
superposer (503) les scènes bidimensionnelles correspondant à toutes les scènes tridimensionnelles, afin d'associer différentes scènes virtuelles par l'intermédiaire d'un déclencheur de conversion de scène.

3. Procédé selon la revendication 1, comprenant en outre l'étape suivante :
collecter une première image de scène réelle dans une scène réelle par l'intermédiaire d'une caméra, lorsque la scène virtuelle initiale comprend la scène réelle ;
superposer au moins deux premiers déclencheurs de conversion de scène et des informations partielles d'au moins deux scènes virtuelles cibles sur la première image de scène réelle, afin d'obtenir une image hybride virtuelle-réelle ; et
afficher l'image hybride virtuelle-réelle.

4. Procédé selon la revendication 1, dans lequel la scène virtuelle initiale est associée à au moins deux premiers déclencheurs de conversion de scène, et un des au moins deux premiers déclencheurs de conversion de scène est un déclencheur de conversion de scène virtuelle-réelle pour une conversion entre une scène virtuelle et une scène réelle ; et
où le procédé comprend en outre les étapes suivantes :
collecter une deuxième image de scène réelle dans la scène réelle par l'intermédiaire d'une caméra ; et
superposer la deuxième image de scène réelle à une position du déclencheur de conversion de scène virtuelle-réelle.

5. Procédé selon la revendication 5, comprenant en outre les étapes suivantes :
collecter une troisième image de scène réelle dans la scène réelle en fonction d'un angle en temps réel et d'une position de la caméra, lorsque le déclencheur de conversion de scène virtuelle-réelle dans la scène virtuelle initiale est déterminé comme étant déclenché ; et
afficher la troisième image de la scène réelle.

6. Procédé selon la revendication 1, dans lequel deux déclencheurs de conversion de scène qui sont spatialement adjacents sont associés à la même scène virtuelle cible, et les deux déclencheurs de conversion de scène qui sont spatialement adjacents sont disposés en série.

7. Procédé selon la revendication 6, dans lequel la réception de l'opération de déclenchement sur le premier déclencheur de conversion de scène comprend l'étape suivante :
déterminer le déclenchement du premier déclencheur de conversion de scène dans la scène virtuelle initiale, lorsque l'objet virtuel atteint une position du premier déclencheur de conversion de scène.

8. Procédé selon la revendication 7, dans lequel la scène virtuelle cible déterminée est une première scène virtuelle cible, et
dans lequel le rendu de la scène virtuelle cible déterminée et du deuxième ensemble de déclencheurs de conversion de scène déterminé et l'affichage de la scène virtuelle cible déterminée et du deuxième ensemble de déclencheurs de conversion de scène déterminé dans la région d'écran comprennent les étapes suivantes :
effectuer le rendu de la première scène virtuelle cible et du deuxième déclencheur de conversion de scène associé à la première scène virtuelle cible ;
afficher, dans la région d'écran, la première scène virtuelle cible et le deuxième déclencheur de conversion de scène associé à la première scène virtuelle cible ; et
déterminer que la première scène virtuelle cible est la scène virtuelle initiale, et déterminer que le deuxième déclencheur de conversion de scène associé à la première scène virtuelle cible est le premier déclencheur de conversion de scène dans la scène virtuelle initiale.

9. Procédé selon la revendication 8, comprenant en outre les étapes suivantes :
déterminer le déclenchement du premier déclencheur de conversion de scène dans la scène virtuelle initiale, lorsque l'objet virtuel atteint la position du premier déclencheur de conversion de scène dans la scène virtuelle initiale ;
déterminer la conversion de la scène virtuelle initiale en une deuxième scène virtuelle cible associée au premier déclencheur de conversion de scène dans la scène virtuelle initiale, et déterminer le deuxième déclencheur de conversion de scène associé à la deuxième scène virtuelle cible, en fonction du premier déclencheur de conversion de scène ;
effectuer le rendu de la deuxième scène virtuelle cible et du deuxième déclencheur de conversion de scène associé à la deuxième scène virtuelle cible ; afficher, dans la région d'écran, la deuxième scène virtuelle cible et le deuxième déclencheur de conversion de scène associé à la deuxième scène virtuelle cible ; et
déterminer que la deuxième scène virtuelle cible est la scène virtuelle initiale et que le deuxième déclencheur de conversion de scène associé à la deuxième scène virtuelle cible est le premier déclencheur de conversion de scène dans la scène virtuelle initiale.

10. Procédé selon l'une quelconque des revendications 1 à 9, comprenant en outre l'étape suivante :
effectuer le rendu d'une pluralité de scènes virtuelles cibles différentes dans un même système de coordonnées, les scènes virtuelles cibles appartenant à un ensemble de scènes virtuelles.

11. Procédé selon l'une quelconque des revendications 1 à 9, dans lequel les informations partielles de la scène virtuelle cible comprennent en outre des informations d'index de la scène virtuelle cible, et
où le procédé comprend en outre les étapes suivantes :
afficher les informations d'index de la scène virtuelle cible ;
recevoir une opération de sélection pour sélectionner une scène virtuelle cible, l'opération de sélection étant introduite par l'intermédiaire des informations d'index ; et
effectuer le rendu de la scène virtuelle cible sélectionnée en fonction de l'opération de sélection.

12. Procédé selon la revendication 11, dans lequel il y a X scènes virtuelles entre la scène virtuelle initiale et la scène virtuelle cible sélectionnée, et X est un nombre naturel, et
où, avant d'effectuer le rendu de la scène virtuelle cible sélectionnée conformément à l'opération de sélection, le procédé comprend en outre les étapes suivantes :
déterminer, en fonction de l'opération de sélection, un chemin pour le rendu de la scène virtuelle cible sélectionnée, le chemin comprenant les X scènes virtuelles ; et
effectuer le rendu des X scènes virtuelles, couche par couche, conformément à l'opération de sélection, jusqu'à ce que la scène virtuelle cible sélectionnée soit rendue.

13. Terminal comprenant :
une mémoire, configurée pour stocker un code de programme exécutable par ordinateur ;
un émetteur-récepteur ; et
un processeur, couplé à la mémoire et à l'émetteur-récepteur ;
où le code de programme comprend une instruction, et l'instruction, lorsqu'elle est exécutée par le processeur, configure le terminal pour qu'il exécute le procédé selon l'une quelconque des revendications 1 à 12.

14. Support de stockage informatique, stockant une instruction de logiciel informatique pour un terminal, où l'instruction comprend un programme pour exécuter le procédé selon l'une quelconque des revendications 1 à 12.
